# EUROPEAN PATENT SPECIFICATION

(11) **EP 3 363 671 B1**
(45) Date of publication and mention of the grant of the patent: **25.09.2019**
(21) Application number: 17156455.2
(22) Date of filing: 16.02.2017
(51) Int. Cl.: B60K 6/547, B60K 6/26, B60K 6/36, B60K 6/365, B60K 6/387, F16H 3/00, F16H 3/72, B60K 6/48, B60K 6/38

(54) **MULTI-SPEED POWER SHIFTED HYBRID TRANSMISSION AND METHOD FOR ENGINE START**
MEHRGÄNGIGES LASTGESCHALTETES HYBRIDGETRIEBE UND MOTORSTARTVERFAHREN
TRANSMISSION HYBRIDE À CHANGEMENT DE VITESSES SOUS CHARGE MULTI-VITESSE ET PROCÉDÉ DE DÉMARRAGE DE MOTEUR

(43) Date of publication of application: 22.08.2018
(73) Proprietor: AVL List GmbH, 8020 Graz (AT)
(72) Inventor: DAVYDOV, Vitaly, 8020 GRAZ (AT)
(74) Representative: Babeluk, Michael

(56) References cited:
- EP-A1- 3 031 648
- EP-A1- 3 061 638
- DE-A1-102011 005 562
- US-A1- 2010 173 746
- US-A1- 2013 196 805

## Description

The invention relates to a multi-speed power shifted hybrid transmission, especially for a vehicle, comprising a housing, an input shaft connected to an internal combustion engine, a first driveshaft, a second driveshaft being arranged concentric to the first driveshaft, each of the two driveshafts having a plurality of driving gearwheels on them, at least one driven shaft with a plurality of gearwheels on it meshing with the driving gearwheels on said driveshafts thus forming gearings; a plurality of controllable clutches, selectively connecting said gearwheels to the corresponding shafts, such as to engage the gearings with different gear ratios, an electric machine with a rotor, a planetary gearset with three links, i.e. a first link, a second link, and a third link, with a controllable lock-up clutch, blocking relative rotation between the first driveshaft and the second driveshaft, wherein at least one of the gearings can be engaged with reversed gear ratio from the second driveshaft to any of the driven shafts, wherein the first link is connected to the input shaft, the second link is connected to the second driveshaft, and the third link is kinematically connected to the rotor of said electric machine in a way that a speed ratio between the second link and the third link is negative for stopped first link.

Further the invention relates to a method for engine start in electric mode of a multi-speed power shifted hybrid transmission, especially for a vehicle, comprising a housing, an input shaft, connected to the internal combustion engine, a first driveshaft, a second driveshaft, each of the two concentric driveshafts having a plurality of driving gearwheels on them, at least one driven shaft with a plurality of gearwheels on it meshing with the driving gearwheels on said driveshafts thus forming gearings, a plurality of controllable clutches, selectively connecting said gearwheels to the corresponding shafts, in a way engaging the gearings with different gear ratios, an electric machine with a rotor, a planetary gearset with three links, first of said links being connected to the input shaft, a second link being connected to the second driveshaft, and a third link being kinematically connected to the rotor of said electric machine in a way that a speed ratio between the second link and the third link is negative for stopped first link, a controllable friction clutch, connecting the input shaft to the first driveshaft, a controllable brake device, blocking the rotation of the input shaft against the housing, and a controllable lock-up clutch, blocking relative rotation between said driveshafts, wherein at least one of engageable gear ratios from the second driveshaft to any of the driven shafts is a reverse gear ratio.

The document EP 3 106 336 A1 describes a multi-speed transmission with an input shaft, a first driveshaft, and a second driveshaft, wherein of the two concentric driveshafts have a plurality of driving gearwheels meshing with gearwheels of a driven shaft. The gearwheels for forward speeds are engageable to the shafts with clutches and form a power flow from the driveshafts to the driven shafts with different ratios. A controllable lock-up clutch is arranged between the driveshafts for connecting the driveshafts with each other. The transmission further comprises an electric machine with a rotor, a planetary gearset with three links, wherein a first of said links is connected to the driveshaft and the input shaft, a second link is connected to the second driveshaft and a third link is kinematically connected to the rotor od the electric machine.

WO 2014/017905 A9 shows a transmission system with a clutch module applied between an input shaft of a drive source and a first driveshaft being connected to a first link of a planetary gear. A second link of the planetary gear is connected to an electric machine. There is no brake device applied to any link of the planetary gear, thus replacing an electric lock mode of the electric machine. Further speed ratio between the second link and the third link of the planetary gear set is positive for stopped first link. This does not allow to have two reverse gear ratios with gear ratios enlarging electric vehicle speed range, using only one reverse gearing. The document FR 2 824 509 B1 discloses a similar transmission system with a clutch applied between an input shaft and a first driveshaft. Reverse gear, lock-up clutch and controllable brake are not disclosed. Speed ratio between the second link and the third link of the planetary gearset is positive for stopped first link. This does not allow to have two reverse gear ratios with gear ratios enlarging electric vehicle speed range, using only one reverse gearing.

Brakes applied to one of transmission input shafts of a power split configuration without any direct connection to an engine are disclosed in US 8 684 875 B2 and US 2013/109530 A1. The combustion engine cannot be started by the electric machine in the power split configuration.

The document WO 2014 003672 A1 describes a propulsion system of a combustion engine for a vehicle with a combustion engine with an output shaft, an electric machine, a gearbox with an input shaft and a planetary gear, wherein a first link of the planetary gearset is connected to the output shaft of the combustion engine, a second link of the planetary gearset is connected to the input shaft of the gearbox and wherein a third link of the planetary gearset is connected to a rotor of an electric machine. Two of the links are interlockable by a locking device. The propulsion system comprises a component brake for braking the first link of the planetary gearset.

EP 3 061 638 A1 discloses a multi-speed transmission of the type mentioned above.

EP 3 031 648 A1 discloses a multi-speed transmission comprising an intermediate clutch between the input shaft and a first drive shaft.

US 2013/0196805 A1 discloses a multi-speed transmission with a brake on the input shaft.

It is the object of the present invention to improve the shift quality and to enable engine start in electric propulsion mode without any reduction of the output torque within both engine start phase and further transition from electric propulsion to propulsion from the combustion engine.

According to the invention this is achieved in that the transmission further comprises a controllable friction clutch, connecting the input shaft kinematically to the first driveshaft, and a controllable brake device, blocking the rotation of the input shaft against the housing.

"Reversed gear ratio" is a gear ratio having opposite sign to the other gears. If other gears are used for vehicle driving in forward direction, said gear with reversed ratio is used for driving backwards.

The advantage of this design is 100% power shifting capacity in all conditions. Comparing to state of art passive torque-filled transmission, the motor-brake gets decelerated until blocking at the end of each shift to the even gear, and the clutch gets fully closed at the end of each shift to the odd gear, thus reducing shifting losses. Powershift capacity equivalent to automatic transmission and/or double clutch transmission is enabled with the same number of meshing gears. The motor-brake can be used only in braking mode during power shifting. In case of internal power dissipation in the motor-brake, power shifting capacity does not depend on inverter capacity or battery state of charge.

Another advantage of the transmission according to the present invention is that the electric machine can be designed with reduced size and smaller required cooling capacity. Reduced power losses in the motor-brake during passive torque fill gives opportunity to downsize the electric machine together with its cooling system.

Comparing to the state of the art passive torque-filled transmission, it is possible to decouple the engine from the wheels automatically in case of control system failures in the present invention, the de-energizing of the electric machine decouples the second countershaft from the engine. The normally-open friction clutch with non-self-locking actuator is able to decouple the first countershaft from the engine automatically when said actuator is de-energized.

Further comparing to the state of the art passive torque transmission the transmission according to present invention enables to launch the vehicle in case of any electric system failure or overheating using just friction clutch and odd forward gears.

According to a very simple and low cost embodiment of the invention the first link of the planetary gearset is a planet carrier, the second link is a ring gear, and the third link is a sun gear. This embodiment provides good efficiency at speeds with locked electric drive. The planet gears may be embodied either as single-mesh gears, or as double-mesh gears. The internal gear ratio of the planetary gearset in the single-mesh planet configuration varies typically between -1.6 and -4. In the double-meshed configuration, the sun gear and the ring gear are meshing with different rims of the planets with different pitch radius, thus enlarging the span of the internal gear ratio. According to an alternative embodiment the first link of the planetary gearset is a planet carrier, the second link is a first sun gear, and the third link is a second sun gear, wherein at least two planets are mounted on the planet carrier, wherein a first planet is meshing with the first sun gear and a second planet is meshing with the second sun gear, said first and second planets meshing with each other. This embodiment also enlarges the span of the internal gear ratio.

According to a preferred embodiment of the invention the electric machine is embodied as hysteresis electric machine, wherein the axis of said electric machine is placed apart from the axis of the input shaft and parallel to it, the rotor of said hysteresis electric machine comprises at least one channel for liquid cooling, and said rotor is kinematically connected to the third link of the planetary gearset via cylindrical geartrain. Such an electric machine can be used for vehicle launch and gear shifts exclusively in braking mode of the present invention. Hysteresis motor-brake with rotor cooling enables downsizing of the power inverter and the battery, wherein power shifting capacity is not limited by battery and/or inverter size or battery state of charge.

"Kinematically connected" means that the theoretical speeds of those rotating parts are proportional to each other. Possible embodiments of the kinematic connections are: rigid connection, connection by non-controllable coupling/damper, geartrain with fixed ratio, chain drive, belt drive.

According to a preferred embodiment of the invention the second driveshaft is embodied as hollow shaft, the first driveshaft is mounted inside the second driveshaft, and the friction clutch is embodied as dry clutch with diaphragm spring, wherein the torque transfer connection between the input shaft and the first link of the planetary gearset is realized with the plurality of spokes, guided through the plurality of corresponding slots in said diaphragm spring, and the clutch further comprises axially actuated push bearing controlling operating state of the clutch by interacting with said diaphragm spring. This arrangement of the driveshafts has advantages as following: (1) The friction clutch can be mounted on the engine flywheel. Carry over dry clutch system from manual transmission can be used; (2) First and reverse gear can be placed close to the final drive, improving house stiffness and reducing radial package on the rear side of the transmission; (3) The planetary gearset can be mounted in the same plane with a final drive, reducing transmission axial package.

Preferably the controllable brake device is embodied as friction brake and comprises first braking element, bound with one of the components, kinematically connected to the input shaft, and the second braking element, bound with one of the components, kinematically connected to the transmission housing, said braking elements interacting with each other thus creating braking torque. The friction brake can be released smoothly under load. If the vehicle is intensively accelerated in electric mode at reverse speed engaged before engine starting, the resulting reaction torque on the input shaft might exceed static drag torque of the engine, so that the brake is to be closed. When the engine is to be started, smooth brake disengagement under load is required to avoid torque interruption during the transition from electric drive to combustion engine mode.

According to a preferred embodiment of the invention the friction clutch is embodied as normally open with push bearing, first braking element is bound to the diaphragm spring of the clutch on its side, exposed to the transmission housing, wherein the controllable brake device is engaged in initial position of the push bearing, said brake device is disengaged at partial travel of the push bearing and the clutch is engaged at further travel of said push bearing. Normally open means that the clutch is open without actuation force, wherein the open clutch position is defined by a spring. In contrast to this a normally closed clutch is closed by spring and opened by actuating force. This embodiment comprises a brake mounted to the clutch spring. A combined clutch/brake actuator save system weight, package and cost. This clutch embodiment is self-opened when the actuator is de-energised.

Alternatively, the friction clutch may be embodied as normally closed with release bearing, wherein first braking element is bound to the release bearing actuator moving element, and wherein the clutch is engaged in initial position of the release bearing, said clutch is disengaged at partial travel of the release bearing and the controllable brake device is engaged at further travel of said release bearing. This embodiment has reduced axial force impact on the engine crankshaft thrust bearings and the release bearing.

According to the invention for a 5-speed embodiment for transverse powertrain arrangement the first driveshaft comprises first and second driving gearwheels, the second driveshaft comprises third and fourth driving gearwheels, the first driven shaft comprises first, second, third and fourth driven gearwheels, meshing with first, second, third and fourth driving gearwheels, respectively, thus forming gearings from first to fourth, and the transmission further comprises a second driveshaft with a reverse driven gearwheel on it, meshing with the third driven gearwheel on the first driven shaft thus forming reverse gearing, said controllable clutches selectively engaging said gearings, wherein at least two reverse speeds with sequentially descending gear ratios, and least five forward speeds with sequentially descending gear ratios are provided as follows:
- first reverse speed from the input shaft to the second driven shaft is provided by the engaged reverse gearing, engaged lock-up clutch and closed friction clutch;
- second reverse speed from the input shaft to the second driven shaft is provided by the engaged reverse gearing and electrical lock of the electric machine rotor;
- first forward speed from the first driveshaft to the driven shaft is provided by the engaged third gearing, engaged lock-up clutch and closed friction clutch;
- second forward speed from the input shaft to the first driven shaft is provided by the engaged third gearing and electrical lock of the electric machine rotor;
- third forward speed from the input shaft to the first driven shaft is provided by the engaged first gearing and closed friction clutch;
- fourth forward speed from the input shaft to the first driven shaft is provided by the engaged fourth gearing and electrical lock of the electric machine rotor;
- fifth forward speed from the input shaft to the first driven shaft is provided by the engaged second gearing and closed friction clutch;

This 2.5-shaft architecture with second driven shaft for reverse gear is characterized with short axial package and high stiffness of the transmission housing.

An extension towards 6-speed transverse architecture can be realized in that the second driveshaft further comprises fifth driving gearwheel, the first driven shaft further comprises fifth driven gearwheel, said gearwheels meshing thus forming fifth gearing, one of the controllable clutches selectively engaging said gearing, wherein a sixth forward speed from the input shaft to the first driven shaft is provided by the engaged fifth gearing and electrical lock of the electric machine rotor.

Further an extension towards 7-speed transverse architecture can be obtained in that the first driveshaft further comprises sixth driving gearwheel, the first driven shaft further comprises sixth driven gearwheel, said gearwheels meshing thus forming sixth gearing, one of the controllable clutches selectively engaging said gearing, wherein a seventh forward speed from the input shaft to the first driven shaft is provided by the engaged sixth gearing and closed friction clutch.

Preferably the controllable clutches engaging the powerflow from the first driveshaft to the driven shafts are embodied as synchronizers, and the controllable clutches engaging the powerflow from the second driveshaft to the driven shafts, and the lock-up clutch are embodied as dog clutches. The electric machine can be used as central synchronizer. Therefore, dog clutches can be used for the reverse speed, first and even forward speeds. The lock-up clutch can be embodied as dog clutch in low-cost variation of the present invention, with more complex engagement algorithm at 2^{nd} or 2R speed, comprising following steps:
i. If the speed of the first driveshaft exceeds the speed of the second driveshaft (caused, for example, by the drag torque of the friction clutch), pre-synchronization 3^{rd} speed by the synchronizer cones without engagement of the dog teeth is performed. First driveshaft speed is thus reduced, getting closer to the second driveshaft (positive at 2^{nd} speed or negative at R2 speed).
ii. If the speed of the first driveshaft is below the speed of the second driveshaft (caused, for example, by the drag torque of the bearings), friction clutch is applied, thus pulling the first driveshaft towards engine speed till the moment of speed synchronization between the first and second driveshafts.
iii. Lock-up clutch is then engaged with small speed difference.

Further preferably the controllable clutches engaging the powerflow from the first driveshaft to the driven shafts, and the lock-up clutch are embodied as synchronizers, and the controllable clutches engaging the powerflow from the second driveshaft to the driven shafts are embodied as dog clutches. The Lock-up clutch can be embodied as synchronizer to be engaged using simple and robust algorithm (direct speed synchronization of the driveshafts by the synchronizer).

According to a simple embodiment of the invention at least one of the controllable clutches is embodied as double-sided dog clutch, said dog clutch selectively connects two idler gearwheels to the corresponding shafts, said two idler gearwheels are placed on both sides of the fixed gearwheel, wherein two sides of said dog clutch are connected by the plurality of bars mounted through the openings in said fixed driven gearwheel. The double-sided dog clutch is mounted through the fixed gearwheel. In this way axial package of the transmission can be reduced and shaft bending stiffness can be increased. The rigid connection of the driven gearwheel improves NVH performance (NVH= Noise, Vibration, Harshness) of corresponding gear due to limited tilting under axial load. Preferred embodiment for the dog clutches.

According to an advantageous embodiment of the invention at least one of the gearwheels is rotationally fixed to one of the shafts by the splines with the opportunity to slide along said shaft, and the engaging elements of at least one controllable clutch are bound with said gearwheel in a way that said controllable clutch is engaged at in one axial position of said gearwheel and disengaged in another axial position. Combined gearwheel and shifting sleeve reduce axial package of the transmission and increase shaft bending stiffness. This is a preferred embodiment for the synchronizers, requiring full circumference of the shifting sleeve to be in contact with the synchronizer ring cone. More in detail the rim of said gearwheel is embodied as helical gear rim, the splines are embodied as helical, and the dog teeth of said controllable clutch have asymmetric profile, wherein profile helix angles of said gear rim, splines and dog teeth are selected in a way that the axial forces from said gear rim, splines and dog teeth under torque are counteracting at least partly balancing each other. Helical gears are preferred in target application to reduce whine noise. The alignment of the helix angles allows to reduce resulting axial force under torque applied to the shifting fork. When these forces are completely balanced, no force is applied to the shifting fork or gear holding detent. The forces on the dog teeth flanks should be partially balanced. The resulting force should keep the gear in the position with fully engaged dog teeth.

According to the inventive method for engine start in electric mode of the multi-speed power shifted hybrid transmission, the method starts when
-. the gearing from the second driveshaft to the driven shaft having reverse gear ratio is engaged;
-. the input shaft is being stopped;
-. the electric machine is applying driving torque leading to the positive torque applied to the input shaft and positive torque applied to that of driven shafts which is engaged to the second driveshaft with reverse gear ratio;
-. the controllable lock-up clutch is disengaged;
-. the controllable brake device is open;
and comprising the steps:
a) accelerating the input shaft at least by the driving torque of the electric machine up to the speed level when mean engine firing torque exceeds engine drag torque;
b) establishing the powerflow from the input shaft to the driven shaft with forward gear ratio by closing the controllable friction clutch and applying driving torque from the engine.

The method enables an increased vehicle speed range in electric mode with reduced number of gears. The maximal vehicle speed in electric mode is limited by the gear ratio of the reverse gear at mechanical point in ECVT mode. This gear ratio cannot be selected too small, because the gradeability in ICE mode (ICE=Internal combustion engine) would be limited in this case.

The combination of the lock-up clutch and negative speed ratio between the second link and the third link for stopped first link enables double usage of the reverse gear (R1, R2) with two different gear ratios.

R1 ICE gear is provided by engaged lock-up clutch and closed friction clutch.

R2 ICE gear is provided by electrically locked rotor. Due to negative speed ratio between the second link and the third link for stopped first link, the R2 ratio is smaller than R1.

In this way, the R1 ratio can be defined to ensure required gradeability, and the R2 ratio is selected independently by choosing proper ratio of the planetary gearset. Preferable R1-R2 gear step in the range of 1.5..2 enables increase of the maximal speed in electric mode by 1.5..2 times without sacrificing gradeability in reverse direction or using additional reverse gearing with higher ratio for reverse launch in ICE mode.

Two forward gear ratios G1 and G2 using one G1/2 gearing are provided in the same way. The G1-G2 stepping is equal to R1-R2 in this case.

Transition from electric drive mode to combustion engine drive mode can be realized without torque interruption. The second independently controlled torque transfer device (friction clutch) gives opportunity to start the engine in electric driving mode and connect it to the driven shaft without output torque interruption or harsh fluctuations.

According to a preferred embodiment, before the method starts, the brake device is transferred from closed to open state. The usage of the brake device is mandatory at torque levels applied to the input shaft higher than engine static drag torque (10..40% of engine rated torque, for typical passenger car engines in warm condition). At lower torque level the brake can be in open state before starting the method.

Further, before method starts, one gearing from the first driveshaft to the driven shaft may be engaged by one of the controllable clutches, and the controllable friction clutch may be open. The even gear should be preferably preselected to reduce transient time from the electric mode to the internal combustion engine mode. As soon as the engine is able to speed-up by the firing torque, the friction clutch actuator starts closing the clutch to establish the powerflow from the engine to the driven shaft.

According to a further embodiment of the invention, the method further comprises the steps:
c) applying the braking torque by an external braking device to one of the links kinematically connected to the driven shafts when the input shaft is being stopped, thus reducing vehicle tractive force;
d) releasing the braking torque from the external braking device when the input shaft is rotating.

For example, the external braking device is a vehicle wheel brake.

If the torque level applied to the input shaft is below engine static drag torque, the engine start is impossible. Higher applied torque results to increase of the vehicle tractive effort. If the resulting tractive effort exceeds the demand of the driver or autonomous driving system, vehicle wheel brakes should be applied within engine cranking phase to limit tractive effort. As soon as the engine is able to speed-up by the firing torque, the torque applied to the input shaft by the electric machine can be reduced, and the wheel brakes can be released simultaneously.

The method according to the invention may further comprise the steps:
e) releasing the driving torque by the electric machine simultaneously with torque ramp-up from the engine to the first driveshaft in a way that the resulting torque on the driven shafts remain constant, as soon as the powerflow from the input shaft to the driven shaft with forward gear ratio is established and the driving torque from the engine is applied, and then;
f) disengaging the gearing from the second driveshaft to the driven shaft having reverse gear ratio.

The vehicle speed range is limited when the reverse gear is engaged from the second driveshaft to the driven shaft, and the forward gear is engaged from the first driveshaft to the driven shaft at the same time. As soon as the powerflow from the input shaft to the driven shaft with forward gear ratio is established and the driving torque from the engine is applied, the forward speed from the second driveshaft to the output shaft is to be preselected (G1/2 or G4 in disclosed embodiments, depending on initial vehicle speed).

With a further step g1) the engine speed and the first driveshaft speed are synchronized, and the controllable friction clutch is fully closed. When the vehicle speed after engine start is above minimal speed with idling engine at selected gear from the first driveshaft to the driven shaft, the clutch can be fully closed.

According to an alternative embodiment the method further comprises the steps:
g) the engine speed exceeds the driveshaft speed, so that the controllable friction clutch is slipping under load;
h) the electric machine is synchronizing the speeds of the controllable clutch elements of one of the gearings from the second driveshaft to the driven shaft having forward gear ratio, and then;
i) engaging said gearing from the second driveshaft to the driven shaft having forward gear ratio, and then;
j) the electric machine is applying a braking torque leading to the negative torque applied to the input shaft and positive torque applied to that of driven shafts which is engaged to the second driveshaft with forward gear ratio;
k) the friction clutch is disengaged simultaneously with electric machine braking torque ramp-up in a way that the resulting torque on the driven shafts remain constant.

When the vehicle speed after engine start is below minimal speed with idling engine at selected gear from the first driveshaft to the driven shaft, the clutch can transfer the power to the driven shafts in slipping condition. In order to reduce power losses, clutch heating and wear, a forward speed from the second driveshaft to the driven shaft with higher gear ratio in the disclosed embodiments) should be preselected within short time frame. As soon as gear preselection is done, the torque should be handed over to this lower gear by opening the clutch and applying braking torque by the electric machine simultaneously.

The invention is explained below in closer detail by reference to the drawings, wherein:
- Fig. 1: is a schematic illustration of a 5-speed transmission in accordance with a first embodiment of the invention;
- Fig. 2: is a schematic illustration of a 6-speed transmission in accordance with a second embodiment of the invention;
- Fig. 3: shows powerflow of said 6-speed transmission at 1^{st} forward speed;
- Fig. 4: shows a power split device velocity diagram for powerflow shown in Fig. 3;
- Fig. 5: shows powerflow of said 6-speed transmission at 2^{nd} forward speed;
- Fig. 6: shows a power split device velocity diagram for powerflow shown in Fig. 5;
- Fig. 7: shows a torque chart example for engine start from EV mode (electric vehicle mode),
- Fig. 8: shows a rotational speed chart example for engine start from EV mode,
- Fig. 9: shows a power flow chart example for engine start from EV mode,
- Fig. 10: shows powerflow of 6-speed transmission embodiment at step I of engine start from EV mode, as indicated in Fig. 7 to 9;
- Fig. 11: shows a power split device velocity diagram for powerflow shown in Fig. 10;
- Fig. 12: shows powerflow of said 6-speed transmission at step II of engine start from EV mode, as indicated in Fig. 7 to 9;
- Fig. 13: shows a power split device velocity diagram for powerflow shown in Fig. 12;
- Fig. 14: shows powerflow of said 6-speed transmission at step III of engine start from EV mode, as indicated in Fig. 7 to 9;
- Fig. 15: shows a power split device velocity diagram for powerflow shown in Fig. 14;
- Fig. 16: shows powerflow of said 6-speed transmission at step IV of engine start from EV mode, as indicated in Fig. 7 to 9;
- Fig. 17: shows a power split device velocity diagram for powerflow shown in Fig. 12;
- Fig. 18: shows powerflow of said 6-speed transmission at step V of engine start from EV mode, as indicated in Fig. 7 to 9;
- Fig. 19: shows a power split device velocity diagram for powerflow shown in Fig. 12;
- Fig. 20: shows powerflow of said 6-speed transmission at step VI of engine start from EV mode, as indicated in Fig. 7 to 9;
- Fig. 21: shows a power split device velocity diagram for powerflow shown in Fig. 12;
- Fig. 22: shows powerflow of said 6-speed transmission at step VII of engine start from EV mode, as indicated in Fig. 7 to 9;
- Fig. 23: shows a power split device velocity diagram for powerflow shown in Fig. 12;
- Fig. 24: shows powerflow of said 6-speed transmission at step VIII of engine start from EV mode, as indicated in Fig. 7 to 9;
- Fig. 25: shows a power split device velocity diagram for powerflow shown in Fig. 12;
- Fig. 26: shows powerflow of said 6-speed transmission at step IX of engine start from EV mode, as indicated in Fig. 7 to 9;
- Fig. 27: shows a power split device velocity diagram for powerflow shown in Fig. 12;
- Fig. 28: is a schematic illustration of a 6-speed transmission in accordance with a third embodiment of the invention;
- Fig. 29: is a schematic illustration of a 6-speed transmission in accordance with a fourth embodiment of the invention;
- Fig. 30: is a schematic illustration of a 6-speed transmission in accordance with a fifth embodiment of the invention;
- Fig. 31: is a schematic illustration of a 7-speed transmission in accordance with a sixth embodiment of the invention;
- Fig. 32: is a schematic illustration of a combined clutch and brake device of an inventive transmission in a normally open clutch embodiment in an initial position;
- Fig. 33: this combined clutch and brake device in partial actuator travel position;
- Fig. 34: this combined clutch and brake device in full actuator travel position;
- Fig. 35: is a schematic illustration of a combined clutch and brake device of an inventive transmission in a normally closed clutch embodiment in an initial position;
- Fig. 36: this combined clutch and brake device in partial actuator travel position;
- Fig. 37: this combined clutch and brake device in full actuator travel position; and
- Fig. 38: is an example of the embodiment of the sliding helical gear with balanced axial forces.

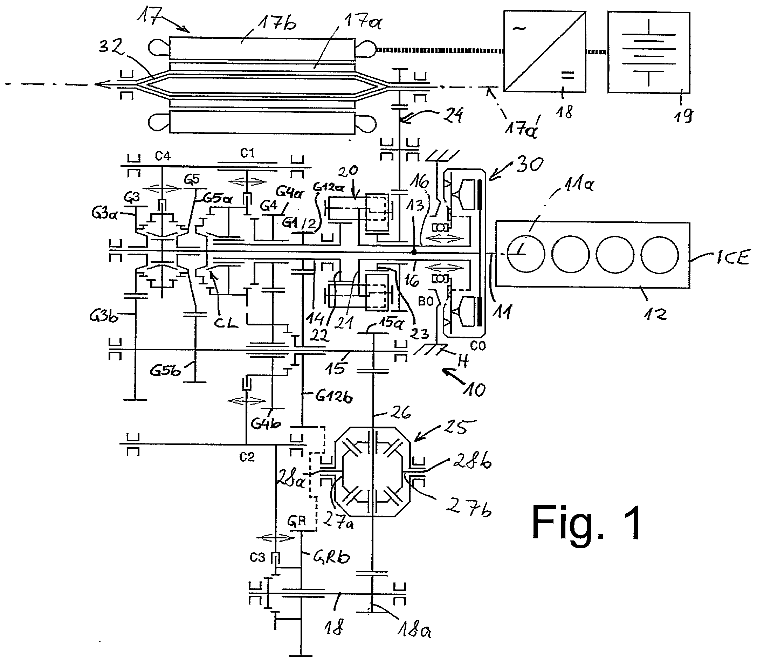

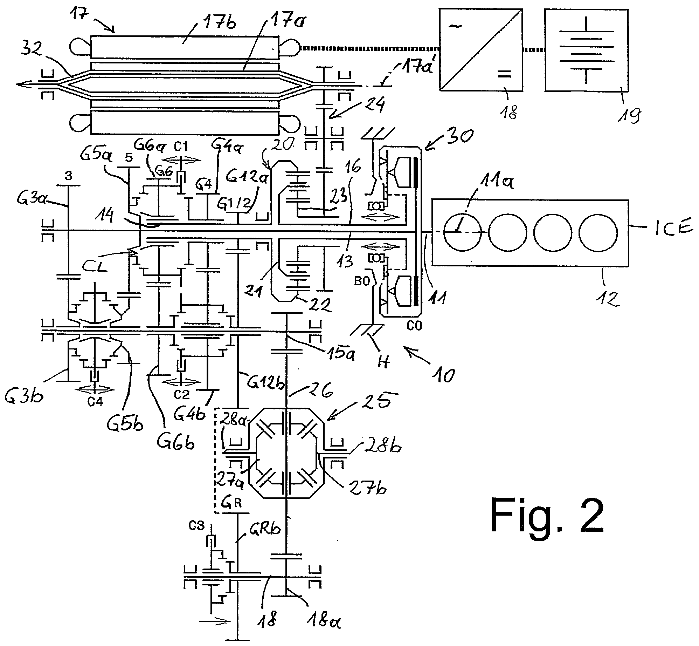

Fig. 1 and 2 show multi-speed power shifted hybrid transmissions for vehicles, wherein Fig. 1 show a five-speed power shifted hybrid transmission 10 and Fig. 2 a six-speed power shifted hybrid transmission 10.

The transmission 10 comprises a housing H, an input shaft 11 attached to a prime mover 12, for example a combustion engine ICE, a first driveshaft 13 and a second driveshaft 14, wherein the driveshafts 13, 14 are arranged concentrically.

In the embodiments the second driveshaft 14 is embodied as hollow shaft and the first driveshaft 13 is mounted internally through the second driveshaft 14 and through the intermediate driveshaft 16. Between the second driveshaft 14 and the intermediate driveshaft 16 a planetary gear set 20 is arranged. The intermediate driveshaft 16 is connected to the input shaft 11.

In all of the embodiments the transmission 10 comprises an electric machine 17, e.g., a multi-phase induction machine with a squirrel caged rotor 17a and a stator 17b, wherein the windings of the stator 17b are connected to a multi-phase bi-directional AC power inverter 18 and a battery 19, e.g., a low-voltage 12V battery or a 48 V battery, via fixed electrical connection. The rotor 17a may comprise means for forced cooling, e.g. at least one cooling channel 32 for liquid cooling. The inverter 18 can be designed to handle about 3% of rated power of the prime mover 12. The electric machine 17 also may be embodied as a hysteresis synchronous electric machine. Both induction and hysteresis electric machine types are capable of intensive internal power dissipation in the rotor with reduced impact on the stator current in braking mode.

The planetary gearset 20 comprises three links 21, 22, 23, wherein the first link 21, is connected to the input shaft 11 via intermediate driveshaft 16. The second link 22 is connected to the second driveshaft 14, and the third link 23 is kinematically connected to the rotor 17a of the electric machine 17 via a cylindrical geartrain 24. The axis 17a' of the rotor 17a is placed apart from the axis 11a of the input shaft 11. A speed ratio between the second link 22 and the third link 23 is negative for stopped first link 21.

According to the first embodiment shown in Fig. 1 the first link 21 of the planetary gearset 20 is a planet carrier, the second link 22 is first sun gear and the third link 23 is a second sun gear. The second embodiment shown in Fig. 2 differs from Fig. 1 in that second link 22 is designed as a ring gear.

Back to Fig. 1, the first driveshaft 13 has a plurality of driving gearwheels G3a and G5a for 3^{rd} and 5^{th} speeds G3 and G5, meshing with corresponding driven gearwheels G3b and G5b of a driven shaft 15. The second driveshaft 14 comprises a plurality of driving gearwheels G12a and G4a for 1^{st}/2^{nd} and 4^{th} speeds G1, G2, and G4 meshing with corresponding driven gearwheels G12b and G4b of the driven shaft 15. The gearwheels G12a, G3a, G4a, G5a; G12b, G3b, G4b, G5b for forward speeds are engageable to said shafts 13, 14; 15 with clutches C1, C2, C4 forming a power flow from the driveshafts 13, 14 to the driven shaft 15 with different ratios.

According to the second embodiment shown in Fig. 2, the first driveshaft 13 comprises a plurality of driving gearwheels G3a and G5a for 3^{rd} and 5^{th} speeds G3 and G5, meshing with corresponding driven gearwheels G3b and G5b of a driven shaft 15. The second driveshaft 14 has a plurality of driving gearwheels G12a, G4a and G6a for 1^{st}/2^{nd}, 4^{th} and 6^{th} speeds G12a, G4, and G6 are meshing with corresponding driven gearwheels G12b, G4b and G6b of the driven shaft 15. The first driveshaft 13 has a plurality of driving gearwheels G3a and G5a for 3^{rd} and 5^{th} speeds G3 and G5, meshing with corresponding driven gearwheels G3b and G5b of a first driven shaft 15.

The gearwheels G12a, G3a, G4a, G5a, 6a; G12b, G3a, G4a, G5a, 6a for forward speeds are engageable to said shafts 13, 14; 15 with clutches C1, C2, C4 forming a power flow from the driveshafts 13, 14 to the driven shaft 15 with different ratios.

At least one of the controllable clutches C1, C2, C4 is embodied as double-sided dog clutch, said dog clutch selectively connects two idler gearwheels to the corresponding shafts, said two idler gearwheels are placed on both sides of the fixed gearwheel, wherein two sides of said dog clutch are connected by the plurality of bars mounted through the openings in said fixed driven gearwheel.

At least one of the gearwheels is rotationally fixed to one of the shafts by splines with the opportunity to slide along said shaft, and the engaging elements of at least one controllable clutch are bound with said gearwheel in a way that said controllable clutch C1, C2, C4 is engaged in one axial position of said gearwheel and disengaged in another axial position. E.g., a rim of said gearwheel is embodied as helical gear rim, the splines are embodied as helical, and the dog teeth of said controllable clutch have asymmetric profile, wherein preferably profile helix angles of said gear rim, splines and dog teeth are selected in a way that the axial forces from said gear rim, splines and dog teeth under torque are counteracting at least partly balancing each other.

The transmission 10 in each embodiment comprises a controllable friction clutch C0, connecting the input shaft 11 to the first driveshaft 13. Further the transmission 10 comprises a controllable brake device B0, blocking the rotation of the input shaft 11 against the housing H.

In each of the first and second embodiments a controllable lock-up clutch CL is arranged between the driving gears on the driveshafts 13, 14, and connects said driveshafts 13, 14 with each other. In the first to third embodiments shown in the Figs. 1 to 28 the lock-up clutch CL is integrated in clutch C1 and designed as synchronizer.

A gearwheel 26 of a differential 25 constantly meshes with a pinion 15a on the driven shaft 15. Driven links 27a, 27b of the differential 25 are connected to output shafts 28a, 28b of the transmission 10. The axis of the gearwheel 26 may be arranged parallel or not parallel to the axis of the input shaft 11. The gearing 15a, 26 may be embodied as cylindrical or bevel, respectively.

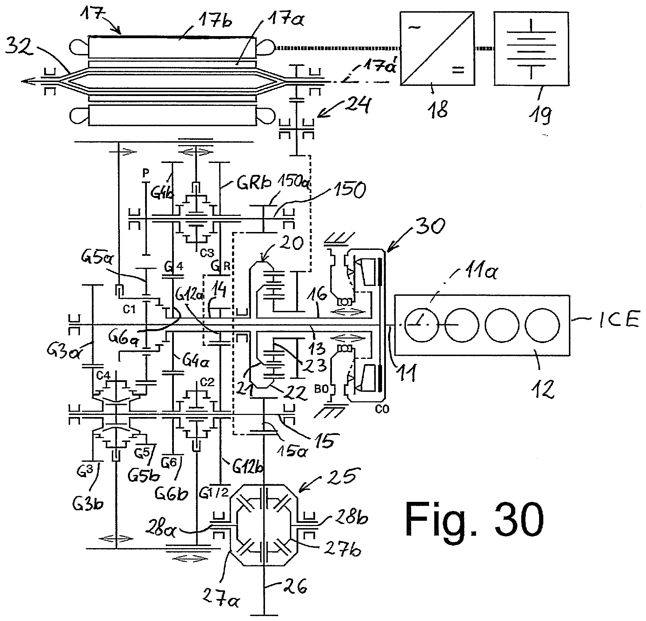

Further the transmission 10 comprises a reverse gear GR with a reverse gear wheel GRb being engageable with another driven shaft 18 by third clutch C3. The gearwheel 26 of the differential 25 constantly meshes with a pinion 18a on the driven shaft 18. The actuator of the third clutch C3, the second clutch C2, or the fifth clutch C5 may be combined in case is said clutches are single-sided (Fig. 1, , 30).

The first embodiment of the transmission 10 shown in Fig. 1 comprises five forward gears G1, G2, G3, G4, G5, two reverse gears R1, R2, a friction clutch C0 and three clutches C1, C2/C3, C4 with shifting sleeves. The transmission 10 enables operating conditions as follows:

| **Mode** | **Gears** | **Motor-brake** | **B0** | **C0** | **C1** | **C2/C3** | **C4** |
|---|---|---|---|---|---|---|---|
| ICE reverse launch | R2 with closed C0 | Braking | Open | Closed | | L | |
| | R2 with preselected R1 | Braking | Open | Open | L | L | |
| | ICE/boosted reverse launch at R1 | Idling/driving | Open | Slipping | L | L | |
| ICE forward launch | ECVT1 with closed C0 | Braking | Open | Closed | | R | |
| | ECVT1 with preselected G1 | Braking | Open | Open | L | R | |
| | ICE/boosted forward launch at G1 | Idling/driving | Open | Slipping | L | R | |
| Electric driving and engine start | Electric driving at R2 with preselected G3 | Driving | Closed | Open | | L | L |
| | Engine start in electric driving mode | Driving | Open | Open | | L | L |
| Shifting from electric driving to ICE | R2+G3 | Driving | Open | Slipping | | L | L |
| | R2 (ECVTR mech. point) | Low speed braking/driving | Open | Open | L | L | |
| | R1 | Idling/driving/braking | Open | Closed | L | L | |
| | G1 | Idling/driving/braking | Open | Closed | L | R | |
| | G2 (ECVT1 mech. point) with G1 preselected | Low speed braking/driving | Open | Open | L | R | |
| | G2 (ECVT1 mech. point) | Low speed braking/driving | Open | Open | | R | |
| ICE/boosted gears | G2 (ECVT1 mech. point) with G3 preselected | Low speed braking/driving | Open | Open | | R | L |
| | G3 with R2 preselected for engine shutdown | Idling/driving/braking | Open | Closed | | L | L |
| | G3 with G2 preselected | Idling/driving/braking | Open | Closed | | R | L |
| | G3, doing R2-G2-G4 preselection | Shaft synchronization | Open | Closed | | | L |
| | G3 with G4 preselected | Idling/driving/braking | Open | Closed | R | | L |
| | G4 (ECVT2 mech. point) with G3 preselected | Low speed braking/driving | Open | Open | R | | L |
| | G4 (ECVT2 mech. point) | Low speed braking/driving | Open | Open | R | | |
| | G4 (ECVT2 mech. point) with G5 preselected | Low speed braking/driving | Open | Open | R | | R |
| | G5 with G4 preselected | Idling/driving/braking | Open | Closed | R | | R |

With reference to Fig. 1 in the shifting table shown above "L" indicates a left side position (first position), and "R" indicates a right side position (second position) of the shifting sleeves of the clutches C1, C2/C3, C4. In the left-side position of the shifting sleeves the clutches C1, C2/C3, C4 are engaged to the corresponding left side gear, respectively. In the right-side position of the shifting sleeves the clutches C1, C2/C3, C4 are engaged to the corresponding right side gear, respectively.

"ECVT" (electromechanical continuously variable transmission) is an operating mode of the electromechanical power split transmission where the gear ratio from the input to the output is controlled by the speed of the electric machine. In the configuration with single electric machine the output torque of the transmission is proportionally controlled by the electromagnetic torque of that electric machine.

"Mechanical point" is an operating point with fixed gear ratio in the ECVT mode, when the electric machine rotor is locked by the static electromagnetic torque. At this point the powerflow between the electric machine and the battery is minimized, thus increasing overall mechanical efficiency of the transmission.

The second embodiment of the transmission 10 shown in Fig. 2 comprises six forward gears G1, G2, G3, G4, G5, G6, two reverse gears R1, R2, a friction clutch C0, four clutches C1, C2, C3, C4 with shifting sleeves, and a brake B0. The transmission 10 enables operating conditions as follows:

| **Mode** | **Gears** | **Motor-brake** | **B0** | **C0** | **C1** | **C2** | **C3** | **C4** |
|---|---|---|---|---|---|---|---|---|
| ICE reverse launch | R2 with closed C0 | Braking | Open | Closed | | | X | |
| | R2 with preselected R1 | Braking | Open | Open | L | | X | |
| | ICE/boosted reverse launch at R1 | Idling/driving | Open | Slipping | L | | X | |
| ICE forward launch | ECVT1 with closed C0 | Braking | Open | Closed | | R | | |
| | ECVT1 with preselected G1 | Braking | Open | Open | L | R | | |
| | ICE/boosted forward launch at G1 | Idling/driving | Open | Slippin g | L | R | | |
| Electric driving and engine start | Electric driving at R2 with preselected G3 | Driving | Closed | Open | | | X | L |
| | Engine start in electric driving mode | Driving | Open | Open | | | X | L |
| Shifting from electric driving to ICE | R2+G3 | Driving | Open | Slippin g | | | X | L |
| | R2 (ECVTR mech. point) | Low speed braking/driving | Open | Open | L | | X | |
| | R1 | Idling/driving/braking | Open | Closed | L | | X | |
| | G1 | Idling/driving/braking | Open | Closed | L | R | | |
| | G2 (ECVT1 mech. point) with G1 preselected | Low speed braking/driving | Open | Open | L | R | | |
| | G2 (ECVT1 mech. point) | Low speed braking/driving | Open | Open | | R | | |
| | G2 (ECVT1 mech. point) with G3 preselected | Low speed braking/driving | Open | Open | | R | | L |
| | G3 with R2 preselected for engine shutdown | Idling/driving/braking | Open | Closed | | | X | L |
| ICE/boosted gears | G3 with G2 preselected | Idling/driving/braking | Open | Closed | | R | | L |
| | G3, doing R2-G2-G4 preselection | Shaft synchronization | Open | Closed | | | | L |
| | G3 with G4 preselected | Idling/driving/braking | Open | Closed | R | | | L |
| | G4 (ECVT2 mech. point) with G3 preselected | Low speed braking/driving | Open | Open | R | | | L |
| | G4 (ECVT2 mech. point) | Low speed braking/driving | Open | Open | R | | | |
| | G4 (ECVT2 mech. point) with G5 preselected | Low speed braking/driving | Open | Open | R | | | R |
| | G5 with G4 preselected | Idling/driving/braking | Open | Closed | R | | | R |
| | G5, doing G4-G6 preselection | Shaft synchronization | Open | Closed | | | | R |
| | G5 with G6 preselected | Idling/driving/braking | Open | Closed | | L | | R |
| | G6 (ECVT3 mech. point) with G5 preselected | Low speed braking/driving | Open | Open | | L | | R |
| | G6 (ECVT3 mech. point) | Low speed braking/driving | Open | Open | | L | | |

With reference to Fig. 2 in the shifting table shown above "L" indicates a left side position (first position), and "R" indicates a right side position (second position) of the shifting sleeves of the clutches C1, C2, C4. In the left-side position of the shifting sleeves the clutches C1, C2, C4 are engaged to the corresponding left side gear, respectively. In the right-side position of the shifting sleeves the clutches C1, C2, C4 are engaged to the corresponding right side gear, respectively. "X" indicates engaged single sided clutch C3.

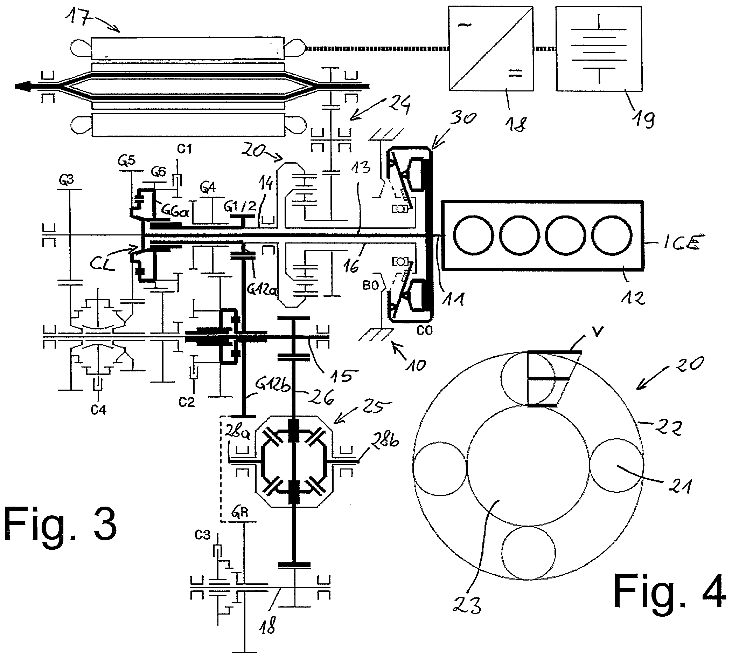

Fig. 3 shows the powerflow at 1^{st} forward speed G1 for the second embodiment. The friction clutch C0 is closed, the brake B0 is open. First clutch C1 is in left position L, second clutch C2 is in the right position. Fig. 4 shows linear velocity v of the links 21, 22 and 23 of the planetary gear sets 20.

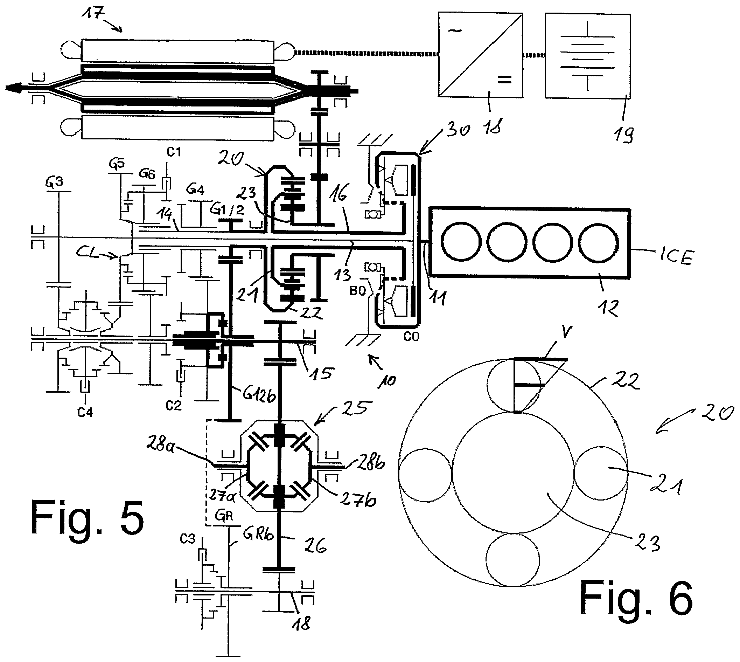

Fig. 5 shows the powerflow at 2^{nd} forward speed G2 for the second embodiment of the transmission 10 according to the present invention. The friction clutch C0 and the brake B0 are open. The second clutch C2 is in the right position. Fig. 6 shows linear velocity v of the links 21, 22 and 23 of the planetary gear sets 20.

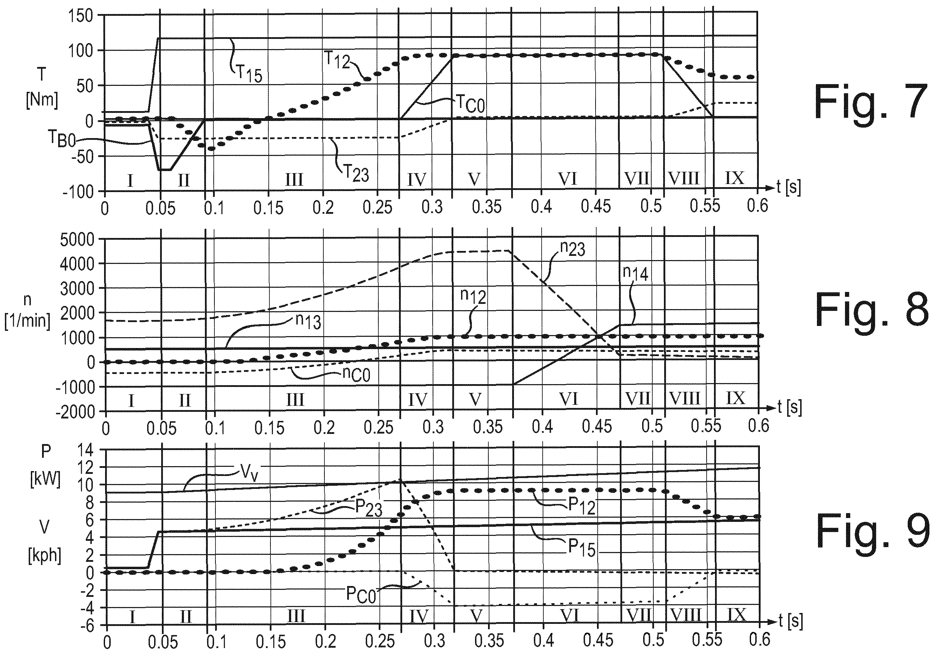

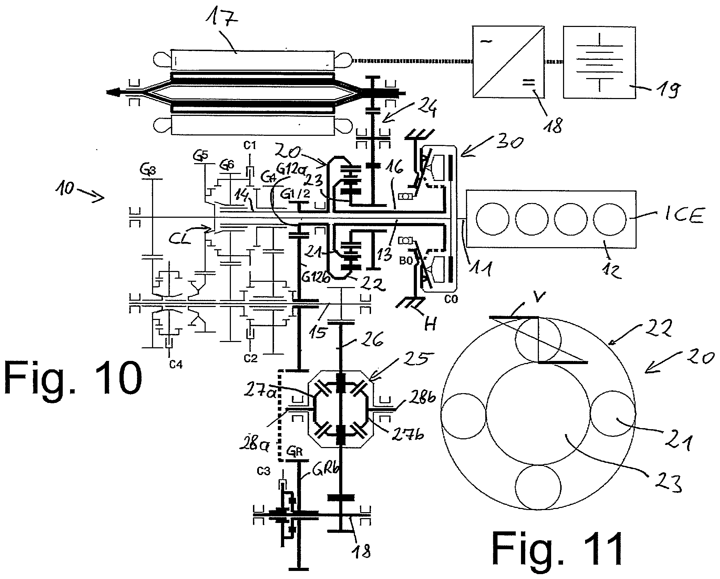

Fig. 7, 8 and 9 show charts with torque T, speed n and power P, plotted against time t, of an engine start from EV mode for a transmission. In Fig. 7 driven shaft torque T₁₅, sun gear torque T₂₃ of the third link 23, engine mean static torque T₁₂, friction clutch torque T_{C0} and brake torque T_{B0} are plotted. In Fig. 8 engine/planet carrier speed n₁₂, first drive shaft speed n₁₃, second drive shaft speed n₁₄, sun gear speed n₂₃ of the third link 23, friction clutch speed n_{C0}, and brake torque T_{B0} are depicted. Fig. 9 shows output power P₁₅, engine power P₁₂, sun gear power P₂₃ of third link, friction clutch slip power loss P_{C0} and vehicle speed vᵥ. The transition time of engine start from EV mode is divided into steps I to IX. The powerflows and velocities v of the power split device 20 of these steps I to IX of the transmission according to the second embodiment is shown in Figs. 10 to 27.

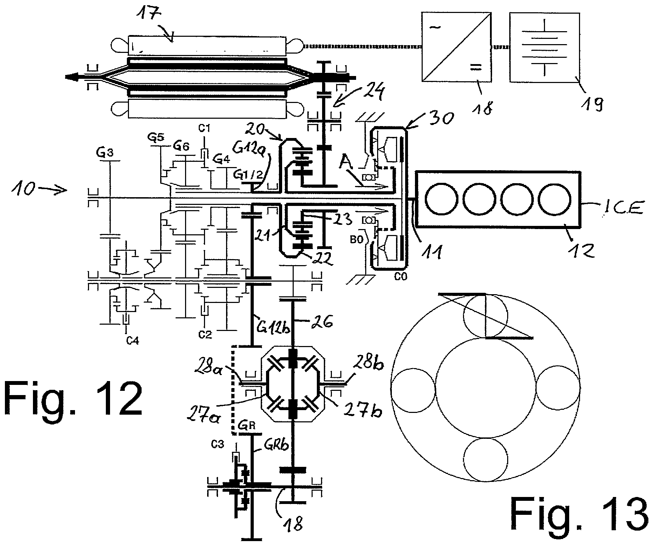

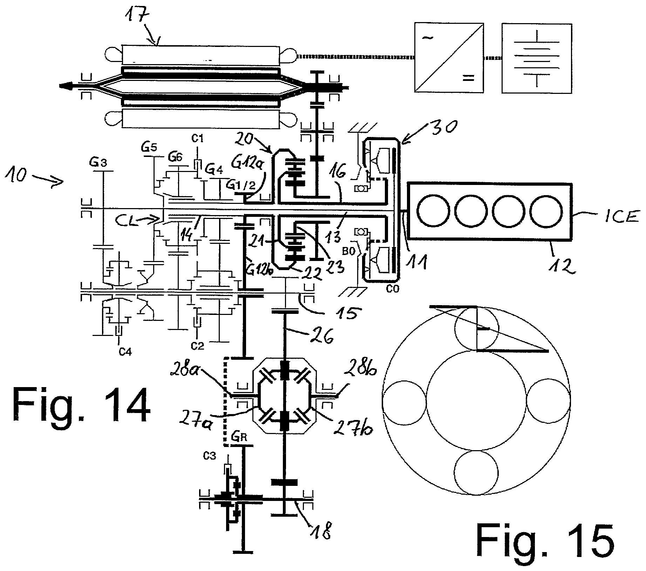

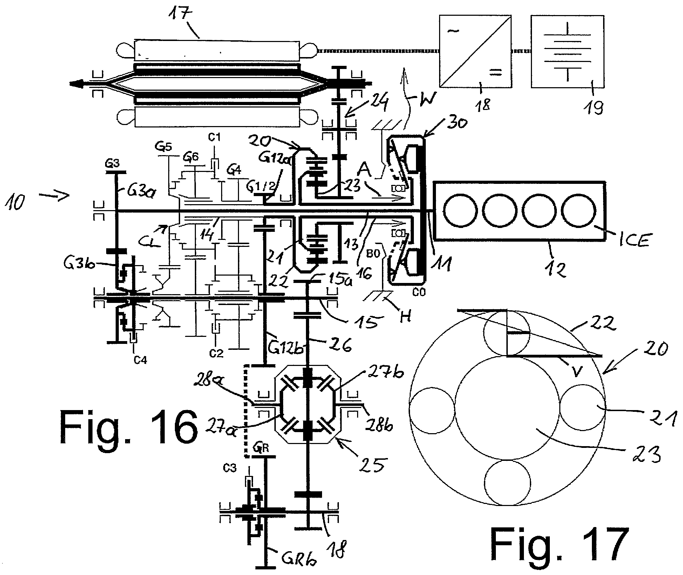

The steps I to IX of the engine start from EV-mode are described as follows:
In step I (Fig. 10, 11) the brake B0 is closed (activated) in order to block the first link 21 of the planetary gearset 20 and the input shaft 11 of the prime mover 12. The second clutch C2 is in middle position. The third clutch C3 is engaged in order to guide the powerflow via reverse gearwheel GRb. The power flows from electric machine 17 via planetary gearset 20 and gearwheels G12a, G12b of first/second gear G1/2 to reverse gearwheel GRb of reverse gear GR and further to output shafts 28a, 28b of the vehicle. The clutch C4 is switched to the left side in order to keep third gear G3 preselected
Step II (Fig. 12, 13): As indicated by arrows A, the push bearing moves to the right thus opening brake B0. The friction clutch C0 is still open. Power is beginning to flow to the input shaft 11 of the prime mover 12. As illustrated in Fig. 14, 15 in step III the first link 21 begins to turn together with the intermediate shaft 16 and the input shaft 11.
Step IV (Fig. 16, 17): The friction clutch C0 is closed to kiss point for slipping (indicated by arrows A). As shown in Fig. 16 drive power flows also via first drives shaft 13, gearwheels G3a, G3b of third gear G3, driven shaft 15 and pinion 15a to gearwheel 26 of the differential 25. The driving torque is handed over from the electric drive to the clutch C0 (fig.7) in a way, that resulting torque on the gearwheel 26 stays constant.

In case if the vehicle speed is below the minimal speed at 3^{rd} gear with idling engine, further steps (V to IX) are executed.

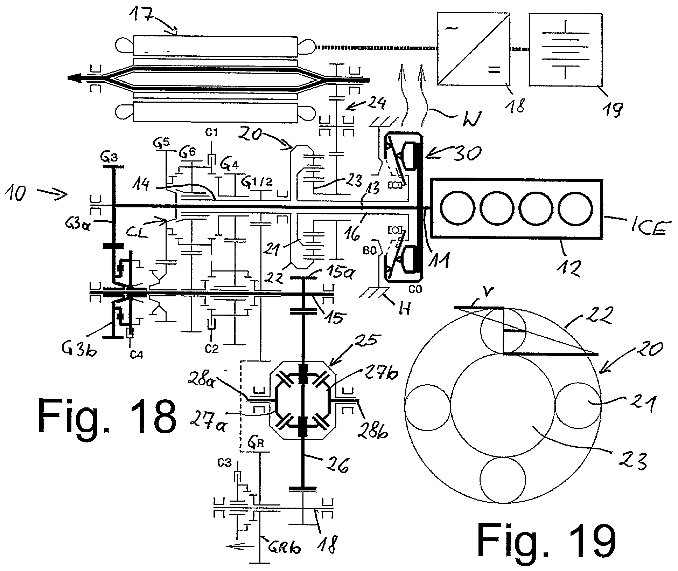

Step V (Fig. 18, 19): Now third clutch C3 is disengaged under no load. Driving powerflow solely happens via driven shaft 15 and pinion 15a to gearwheel 26 of the differential 25.

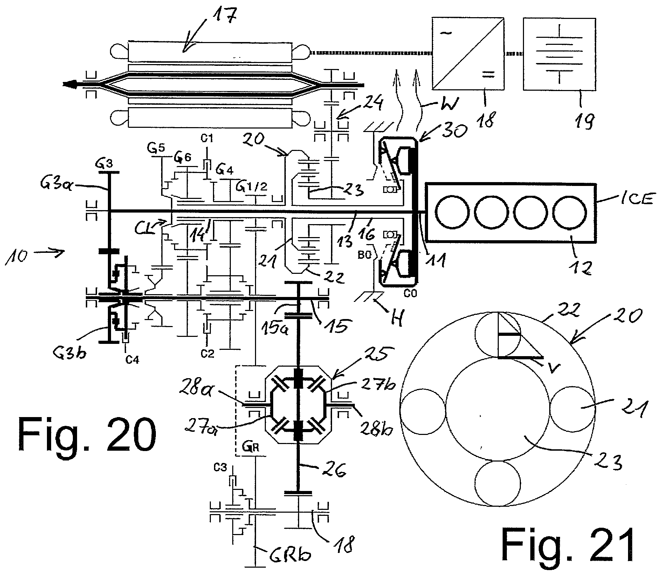

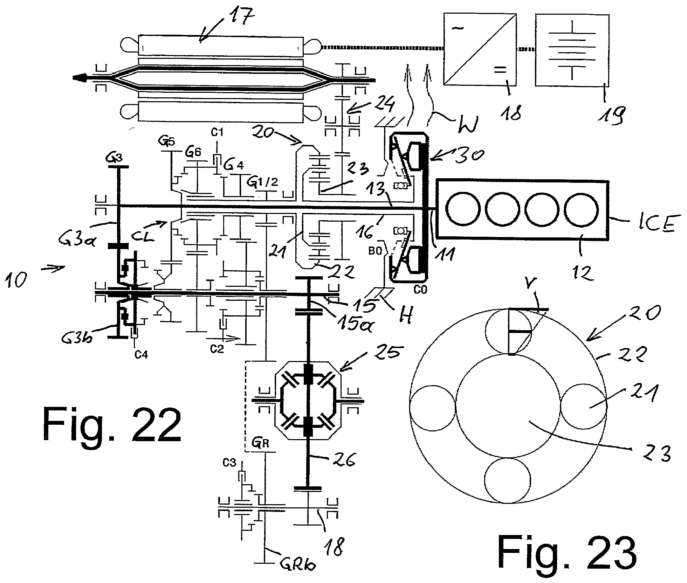

Step VI (Fig. 20, 21): The second link 22 is decelerating and stops moving, the third link is decelerating. In step VII (Fig. 22, 23) the direction of revolution of the second link 22 is changing, the second clutch C2 is switched to right position in order to connect gearwheel G12b to driven shaft 15.

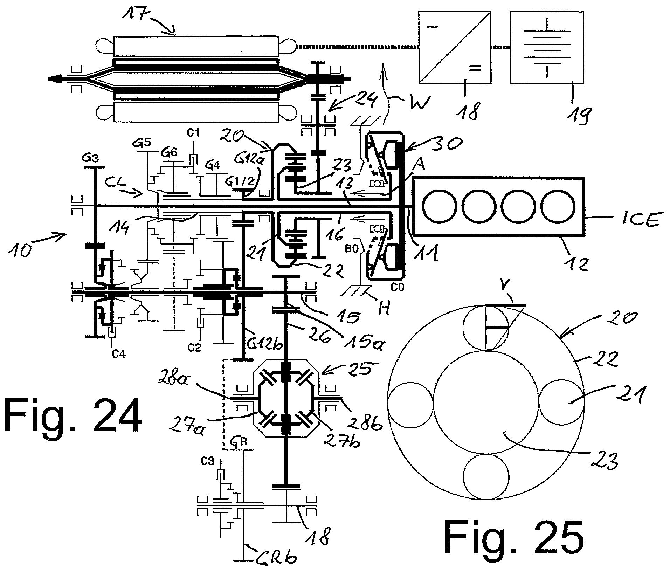

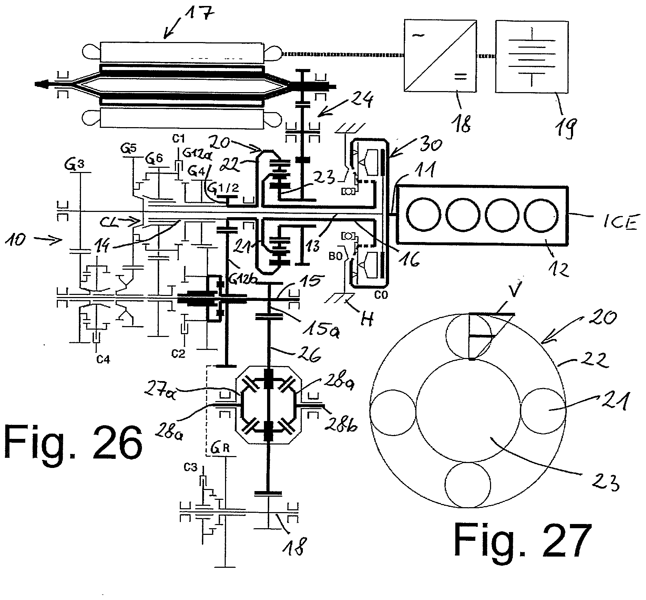

Step VIII (Fig. 24, 25): As indicated by indicated by arrows A, the friction clutch C0 is opened, the electric machine 17applies braking torque synchronously in order to transmit the power from the combustion engine 12 to the gearwheel 26 in ECVT mode. The resulting output torque is also kept constant. Step IX: (Fig. 26, 27) The transmission 10 operates in ECVT mode at second gear G2, having higher ratio than G3.

As shown by arrows W, in steps V to VIII, heat generated by slipping friction clutch C0 is dissipated.

As illustrated in the velocity diagrams shown in Figs. 11 and 13 the speed ratio between the second link 22 and the third link 23 is negative for stopped first link 21 in steps I to II,

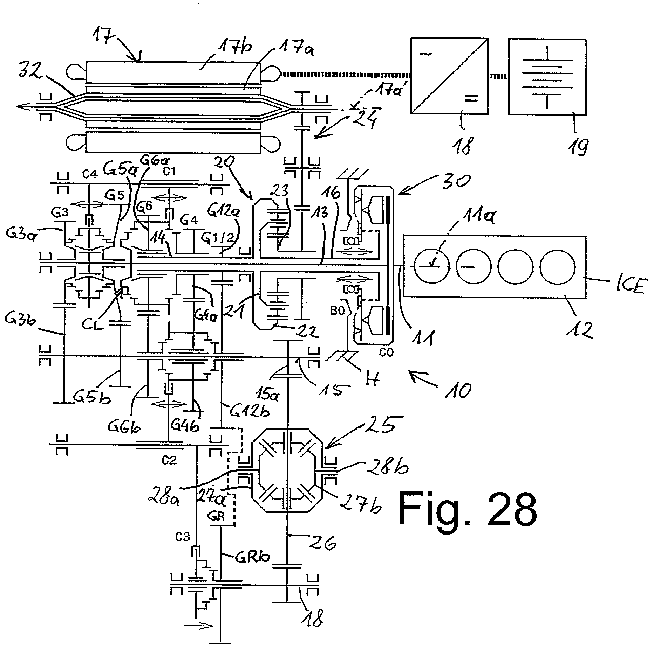

Fig. 28 shows a third embodiment of a 6-speed transmission according to the present invention. The difference to second embodiment is an alternative arrangement of the synchronizer C4 (on the first driveshaft 13). In Fig. 28 a sample arrangement of the shift forks with four forks, two fork axes and four actuators is illustrated.

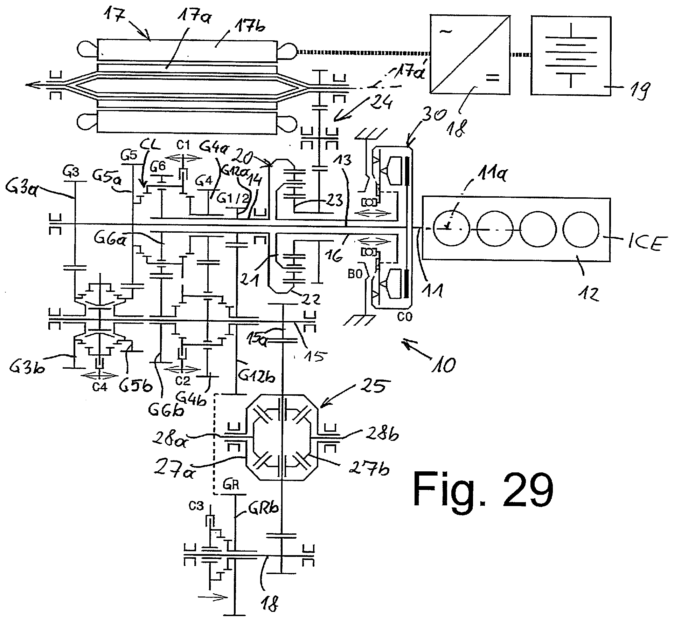

Fig. 29 shows a fourth embodiment of a 6-speed transmission according to the present invention with alternative arrangement of dog clutches C1, C2 with fixed gearwheels and dog clutch-type lock-clutch. The dog clutches comprise a plurality of bars, guided through said fixed gearwheels.

Fig. 30 shows a fifth embodiment of a 6-speed transmission according to the present invention with alternative 3-shaft design and shared driving gearwheel for the 4^{th} and 6^{th} speeds. C0 friction clutch is embodied as normally closed. C2 and C3 clutches are embodied as the double-sided dog clutches. C1 lock-up clutch is embodied as the single-sided dog clutch, comprising the plurality of bars, guided through the fixed driving gearwheel of the 5^{th} speed. C4 clutch is embodied as the synchronizer. The gearwheel 26 of the differential 25 meshes with a second pinion 150a on a second driven shaft 150. Reference P indicates a parking brake. In Fig. 30 the sample arrangement of the shift forks with four forks, two fork axes and four actuators is illustrated. A ratchet wheel P of the park lock mechanism is fixed on the second driven shaft 18. The transmission 10 enables operating conditions as follows:

| **Mode** | **Gears** | **Motor-brake** | **B0** | **C0** | **C1** | **C2** | **C3** | **C4** |
|---|---|---|---|---|---|---|---|---|
| ICE reverse launch | R2 with closed C0 | Braking | Open | Closed | | | R | |
| | R2 with preselected R1 | Braking | Open | Open | X | | R | |
| | ICE/boosted reverse launch at R1 | Idling/driving | Open | Slippin g | X | | R | |
| ICE forward launch | ECVT1 with closed C0 | Braking | Open | Closed | | R | | |
| | ECVT1 with preselected G1 | Braking | Open | Open | X | R | | |
| | ICE/boosted forward launch at G1 | Idling/driving | Open | Slipping | X | R | | |
| Electric driving and engine start | Electric driving at R2 with preselected G3 | Driving | Closed | Open | | | R | L |
| | Engine start in electric driving mode | Driving | Open | Open | | | R | L |
| Shifting from electric driving to ICE | R2+G3 | Driving | Open | Slippin g | | | R | L |
| | R2 (ECVTR mech. point) | Low speed braking/driving | Open | Open | X | | R | |
| | R1 | Idling/driving/braking | Open | Closed | X | | R | |
| | G1 | Idling/driving/braking | Open | Closed | X | R | | |
| | G2 (ECVT1 mech. point) with G1 preselected | Low speed braking/driving | Open | Open | X | R | | |
| | G2 (ECVT1 mech. point) | Low speed braking/driving | Open | Open | | R | | |
| | G2 (ECVT1 mech. point) with G3 preselected | Low speed braking/driving | Open | Open | | R | | L |
| | G3 with R2 preselected for engine shutdown | Idling/driving/braking | Open | Closed | | | R | L |
| ICE/boosted gears | G3 with G2 preselected | Idling/driving/braking | Open | Closed | | R | | L |
| | G3, doing R2-G2-G4 preselection | Shaft synchronization | Open | Closed | | | | L |
| | G3 with G4 preselected | Idling/driving/braking | Open | Closed | | | L | L |
| | G4 (ECVT2 mech. point) with G3 preselected | Low speed braking/driving | Open | Open | | | L | L |
| | G4 (ECVT2 mech. point) | Low speed braking/driving | Open | Open | | | L | |
| | G4 (ECVT2 mech. point) with G5 preselected | Low speed braking/driving | Open | Open | | | L | R |
| | G5 with G4 preselected | Idling/driving/braking | Open | Closed | | | L | R |
| | G5, doing G4-G6 preselection | Shaft synchronization | Open | Closed | | | | R |
| | G5 with G6 preselected | Idling/driving/braking | Open | Closed | | L | | R |
| | G6 (ECVT3 mech. point) with G5 preselected | Low speed braking/driving | Open | Open | | L | | R |
| | G6 (ECVT3 mech. point) | Low speed braking/driving | Open | Open | | L | | |

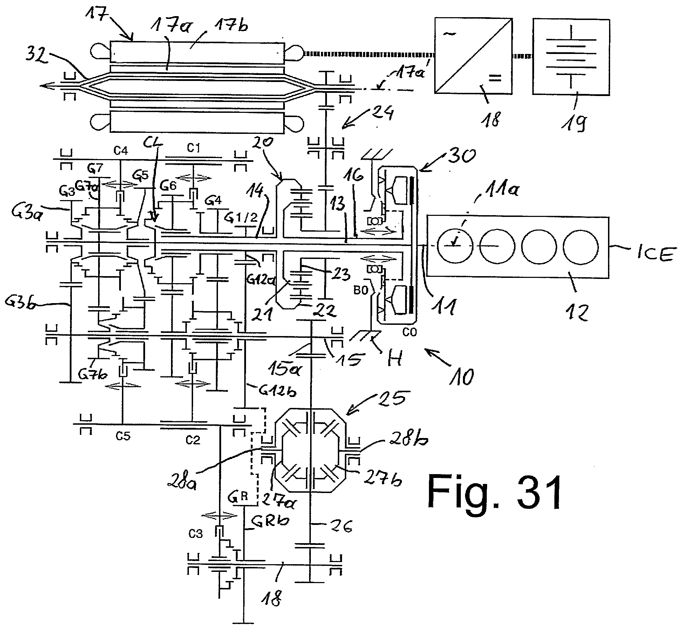

Fig. 31 shows a sixth embodiment of a 7-speed transmission according to the present invention. The difference to embodiments 2-4 is an additional sixth gearing on the first driveshaft 13 for 7^{th} speed G6. Fig. 31 shows a sample arrangement of the shift forks with five forks, two fork axes and four actuators. The transmission 10 enables operating conditions as follows:

| **Mode** | **Gears** | **Motor-brake** | **B0** | **C0** | **C1** | **C2** | **C3/C5** | **C4** |
|---|---|---|---|---|---|---|---|---|
| ICE reverse launch | R2 with closed C0 | Braking | Open | Closed | | | R | |
| | R2 with preselected R1 | Braking | Open | Open | L | | R | |
| | ICE/boosted reverse launch at R1 | Idling/driving | Open | Slipping | L | | R | |
| ICE forward launch | ECVT1 with closed C0 | Braking | Open | Closed | | R | | |
| | ECVT1 with preselected G1 | Braking | Open | Open | L | R | | |
| | ICE/boosted forward launch at G1 | Idling/driving | Open | Slipping | L | R | | |
| Electric driving and engine start | Electric driving at R2 with preselected G3 | Driving | Closed | Open | | | R | L |
| | Engine start in electric driving mode | Driving | Open | Open | | | R | L |
| Shifting from electric driving to ICE | R2+G3 | Driving | Open | Slipping | | | R | L |
| | R2 (ECVTR mech. point) | Low speed braking/driving | Open | Open | L | | R | |
| | R1 | Idling/driving/braking | Open | Closed | L | | R | |
| | G1 | Idling/driving/braking | Open | Closed | L | R | | |
| | G2 (ECVT1 mech. point) with G1 preselected | Low speed braking/driving | Open | Open | L | R | | |
| | G2 (ECVT1 mech. point) | Low speed braking/driving | Open | Open | | R | | |
| | G2 (ECVT1 mech. point) with G3 preselected | Low speed braking/driving | Open | Open | | R | | L |
| | G3 with R2 preselected for engine shutdown | Idling/driving/braking | Open | Closed | | | R | L |
| | G3 with G2 preselected | Idling/driving/braking | Open | Closed | | R | | L |
| ICE/boosted gears | G3, doing R2-G2-G4 preselection | Shaft synchronization | Open | Closed | | | | L |
| | G3 with G4 preselected | Idling/driving/braking | Open | Closed | R | | | L |
| | G4 (ECVT2 mech. point) with G3 preselected | Low speed braking/driving | Open | Open | R | | | L |
| | G4 (ECVT2 mech. point) | Low speed braking/driving | Open | Open | R | | | |
| | G4 (ECVT2 mech. point) with G5 preselected | Low speed braking/driving | Open | Open | R | | | R |
| | G5 with G4 preselected | Idling/driving/braking | Open | Closed | R | | | R |
| | G5, doing G4-G6 preselection | Shaft synchronization | Open | Closed | | | | R |
| | G5 with G6 preselected | Idling/driving/braking | Open | Closed | | L | | R |
| | G6 (ECVT3 mech. point) with G5 preselected | Low speed braking/driving | Open | Open | | L | | R |
| | G6 (ECVT3 mech. point) | Low speed braking/driving | Open | Open | | L | | |
| | G6 (ECVT3 mech. point) with G7 preselected | Low speed braking/driving | Open | Open | | L | L | |
| | G7 with G6 preselected | Idling/driving/braking | Open | Closed | | L | L | |

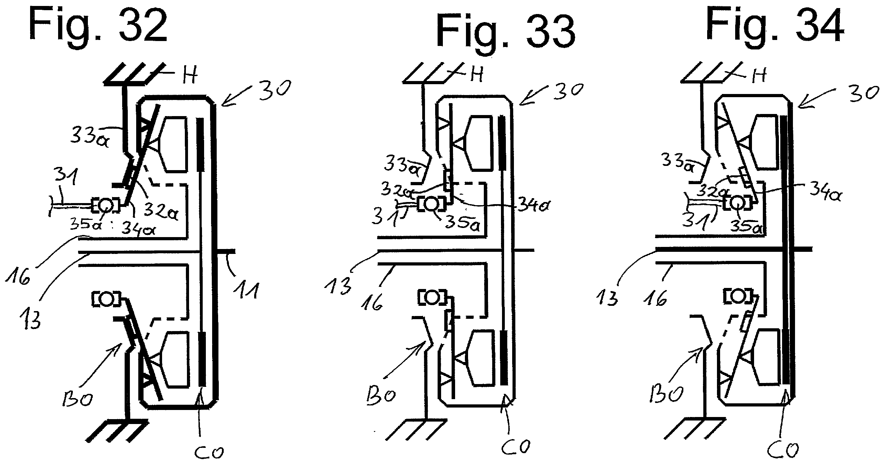

As shown in Figs. 32 to 37, the friction clutch C0 is embodied as dry clutch with diaphragm spring, wherein the torque transfer connection between the input shaft 11 and the first link 21 of the planetary gearset 20 is realized with the plurality of spokes, guided through a plurality of corresponding slots in said diaphragm spring. Further the friction clutch C0 comprises axially actuated push bearing controlling operating state of the friction clutch by interacting with said diaphragm spring.

The controllable brake device B0 is embodied as friction brake and comprises a first braking element 32a, bound with one of the components, kinematically connected to the input shaft 11, and a second braking element 33a, bound with one of the components, kinematically connected to the transmission housing H, wherein said braking elements interact with each other thus creating braking torque.

As shown in the Figs, especially in Fig. 32 to 37, the friction clutch C0 and the controllable brake device B0 may be designed as a unit, i.e. as a combined clutch and brake device 30. A single actuator can be used to control this combined clutch/brake device in a way that the clutch is being disengaged by the partial travel of the actuator, while the brake remains open, and the brake is being engaged by another partial travel of the actuator, while the clutch remains open. The controllability of the transmission during the engine start from EV-mode (Fig.10 to 27) is fully enabled with this single actuator for clutch and brake control.

For example, the friction clutch C0 is embodied as normally open with push bearing 35a, wherein the first braking element 32a is bound to the diaphragm spring 34a of the friction clutch C0 on its side, exposed to the transmission housing H. The controllable brake device B0 is engaged in initial position of the push bearing 35a, and disengaged at partial travel of the push bearing 35a. Further the friction clutch C0 is engaged at further travel of said push bearing 35a.

In detail, Fig. 32 to 34 illustrate different positions of a combined friction clutch and brake device 30 in a normally open embodiment. Normally open means that the friction clutch C0 is held in an opening position by the diaphragm spring 34a, without any activation force applied by an actuator 31. Fig. 32 shows the combined friction clutch and brake device 30 in an initial position with open friction clutch C0 and closed brake B0. Fig. 33 shows the combined friction clutch and brake device 30 in a position with partial actuator travel, wherein the friction clutch C0 and the brake B0 are open. Fig. 34 shows the combined friction clutch and brake device 30 in position with full travel of the actuator 31, wherein the friction clutch C0 is closed and the brake B0 is open.

Alternatively, the friction clutch C0 may be embodied as normally closed with release bearing 35b, wherein a first braking element 32b, bound with one of the components, is kinematically connected to the input shaft 11, and a second braking element 33b is bound to a release bearing actuator moving element 31b, and wherein the friction clutch C0 is engaged in initial position of the release bearing 35b. The friction clutch C0 is disengaged at partial travel of the release bearing 35b and the controllable brake device B0 is engaged at further travel of said release bearing 35b.

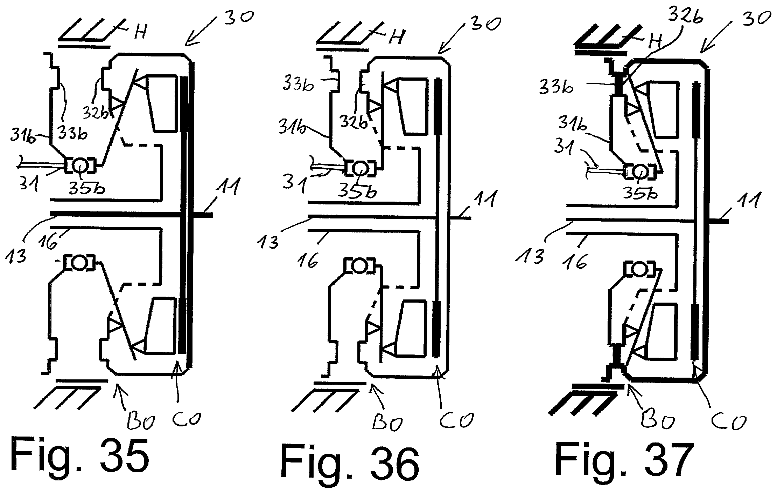

Fig. 35 to 37 illustrate different positions of such a combined friction clutch and brake device 30 in a normally closed embodiment. Normally closed means that the friction clutch C0 is held in a closed position by the diaphragm spring 34a, without any activation force. Fig. 35 shows the combined friction clutch and brake device 30 in an initial position with closed friction clutch C0 and open brake B0. Fig. 36 shows the combined friction clutch and brake device 30 in a position with partial travel of the actuator 31, wherein the friction clutch C0 and the brake B0 are open. Fig. 37 shows the combined friction clutch and brake device 30 in position with full actuator travel, wherein the friction clutch C0 is open and the brake B0 is closed.

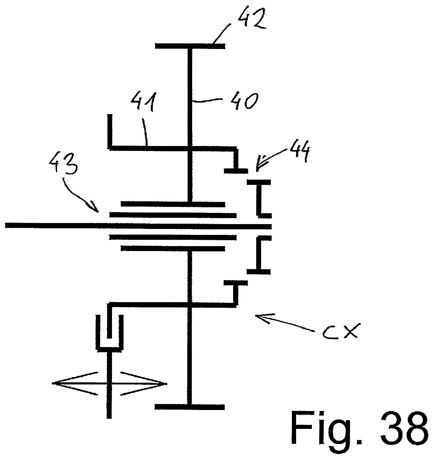

Fig.38 shows a controllable clutch CX with combined gearwheel 40 and shifting sleeve 41 to

illustrate the way to balance axial forces of the sliding helical gear 40 of the combined gearwheel 40 and shifting sleeve 41. The gear rim 42 of the gearwheel 40 is embodied as helical gear rim, the splines 43 are embodied as helical. The dog teeth 44 of the controllable dog clutch CX have asymmetric profile, wherein the profile helix angles of the gear rim 42, splines 43 and dog teeth 44 are selected in a way that the axial forces from the gear rim 42, splines 43 and dog teeth 44 under torque are counteracting at least partly balancing each other. The product of the pitch radius and the helix angle tangent should be equal for the gear rim 41, spline 42 and dog teeth 43. Helix direction is the same for all those elements. In this case the axial forces from the transmitted torque are fully balanced. The back taper of the dog clutches CX, required for their self-lock under load, can be applied as a variation to the helix angle (16 deg. theoretical helix with full compensation, 12 deg. helix on the drive flank, 20 deg. on the coast flank in the example at fig. 38). In this case the resulting axial force under torque will pull the dog clutch CX towards the gearwheel 40.

| Element | Pitch radius, | Helix angle β, deg | tan β | Axial force, N, per 1 Nm torque | Unbalanced axial force, N, per 1 Nm torque |
|---|---|---|---|---|---|
| Gear rim 42 | 60 | 30 | 0.58 | 9.62 | 0.00 |
| **Dog teeth 44 without back taper** | **30** | **16.1** | **0.29** | **9.62** | **0.00** |
| Dog teeth 44, drive flank with ∼4 deg. back taper | 30 | 12 | 0.21 | 7.09 | -2.54 |
| Dog teeth 44, coast flank with ∼4 deg. back taper | 30 | 20 | 0.36 | 12.13 | 2.51 |
| Splines 43 | 20 | 10.89 | 0.19 | 9.62 | 0.00 |

## Claims

1. A multi-speed power shifted hybrid transmission (10), especially for a vehicle, comprising a housing (H), an input shaft (11) connected to a prime mover (12), a first driveshaft (13), a second driveshaft (14) being arranged concentric to the first driveshaft (13), each of the two driveshafts (13, 14) having a plurality of driving gearwheels (G12a, G3a, G4a, G5a; G6a) on them, at least one driven shaft (15, 18) with at least one driven gearwheel (G12b, G3b, G4b, G5b; G6b; GRb) on it meshing with the driving gearwheels (G12a, G3a, G4a, G5a; G6a) on said driveshafts (13, 14) thus forming gearings (G1/2, G3, G4, G5; G6; GR); a plurality of controllable clutches (C0, C1, C2, C3, C4), selectively connecting said gearwheels (G12a, G3a, G4a, G5a; G6a; G12b, G3b, G4b, G5b; G6b; GRb) to the corresponding shafts (13, 14), such as to engage the gearings (G1/2, G3, G4, G5; G6; GR) with different gear ratios, an electric machine (17) with a rotor (17a), a planetary gearset (20) with at least three links, i.e. a first link (21), a second link (22), and a third link (23), with a controllable lock-up clutch (CL), blocking relative rotation between the first driveshaft (13) and the second driveshaft (14), wherein at least one of the gearings (G1/2, G3, G4, G5; G6) can be engaged with reversed gear ratio from the second driveshaft (14) to any of the driven shafts (15, 18), wherein the first link (21) is connected to the input shaft (11), the second link (22) is connected to the second driveshaft (14), and the third link (23) is kinematically connected to the rotor (17a) of said electric machine (17) in a way that a speed ratio between the second link (22) and the third link (23) is negative for stopped first link (21), **characterized in that** the transmission (10) further comprises a controllable friction clutch (C0), connecting the input shaft (11) kinematically to the first driveshaft (13), and a controllable brake device (B0), blocking the rotation of the input shaft (11) against the housing (H).

2. The hybrid transmission according (10) to claim 1, **characterized in that** the first link (21) of the planetary gearset is (20) a planet carrier, the second link (22) is a ring gear, and the third link (23) is a sun gear.

3. The hybrid transmission according (10) to claim 1, **characterized in that** the first link (21) of the planetary gearset is (20) a planet carrier, the second link (22) is a first sun gear, and the third link (23) is a second sun gear, wherein at least two planets are mounted on the planet carrier, wherein a first planet is meshing with the first sun gear and a second planet is meshing with the second sun gear, said first and second planets meshing with each other.

4. The hybrid transmission (10) according to one of the claims 1 to 3, **characterized in that** the electric machine (17) is embodied as hysteresis electric machine, wherein the axis (17a') of said electric machine (17) is placed apart from the axis (11a) of the input shaft (11) and parallel to it, the rotor (17a) of said hysteresis electric machine comprises at least one channel (32) for liquid cooling, and said rotor (17a) is kinematically connected to the third link (23) of the planetary gearset via cylindrical geartrain (24).

5. The hybrid transmission (10) according to one of the claims 1 to 4, **characterized in that** the second driveshaft (14) is embodied as hollow shaft, the first driveshaft (13) is mounted inside the second driveshaft (14).

6. The hybrid transmission (10) according to one of the claims 1 to 5, **characterized in that** the friction clutch (C0) and the controllable brake device (B0) are designed as a combined clutch and brake device (30).

7. The hybrid transmission (10) according to one of the claims 1 to 6, **characterized in that** the first driveshaft (13) comprises first (G3a) and second (G5a) driving gearwheels, the second driveshaft (14) comprises third (G1/2a) and fourth (G4a) driving gearwheels, the first driven shaft (13) comprises first (G3b), second (G5b), third (G1/2b) and fourth (G4b) driven gearwheels, meshing with first (G3b), second (G5b), third (G1/2b) and fourth (G4b) driving gearwheels, respectively, thus forming gearings (G3, G5, G1/2, G4) from first to fourth, and the transmission (10) further comprises a second driven shaft (18) with a reverse driven gearwheel (GR) on it, meshing with the third driven gearwheel (G1/2b) on the first driven shaft (15) thus forming reverse gearing (GR), said controllable clutches (C1, C2, C3, C4) selectively engaging said gearings (G1, G2, G3, G4, GR), wherein at least two reverse speeds (R1, R2) with sequentially descending gear ratios, and at least five forward speeds with sequentially descending gear ratios are provided as follows:
- first reverse speed (R1) from the input shaft (11) to the second driven shaft (14) is provided by the engaged reverse gearing (GR), engaged lock-up clutch (CL) and closed friction clutch (C0);
- second reverse speed (R2) from the input shaft (11) to the second driven shaft (18) is provided by the engaged reverse gearing (GR) and electrical lock of the electric machine rotor (17);
- first forward speed from the first driveshaft (13) to the driven shaft (15, 18) is provided by the engaged third gearing (G1/2), engaged lock-up clutch (CL) and closed friction clutch (C0);
- second forward speed from the input shaft (11) to the first driven shaft (13) is provided by the engaged third gearing (G1/2) and electrical lock of the electric machine rotor (17a) ;
- third forward speed from the input shaft (11) to the first driven shaft (13) is provided by the engaged first gearing (G3) and closed friction clutch (C0);
- fourth forward speed from the input shaft (11) to the first driven shaft (13) is provided by the engaged fourth gearing (G4) and electrical lock of the electric machine rotor (17a);
- fifth forward speed from the input shaft (11) to the first driven shaft (13) is provided by the engaged second gearing (G5) and closed friction clutch (C0);

8. The hybrid transmission (10) according to one of the claims 1 to 7, **characterized in that** the second driveshaft (14) further comprises a fifth driving gearwheel (G6a), the first driven shaft (15) further comprises a fifth driven gearwheel (G6b), said gearwheels (G6a, G6b) meshing thus forming fifth gearing (G6), one of the controllable clutches (C2) selectively engaging said gearing (G6), wherein:
- a sixth forward speed from the input shaft (11) to the first driven shaft (15) is provided by the engaged fifth gearing (G6) and an electrical lock of the electric machine rotor (17a).

9. The hybrid transmission (10) according to one of the claims 1 to 8, **characterized in that** the first driveshaft (13) further comprises a sixth driving gearwheel (G7a), the first driven shaft (15) further comprises a sixth driven gearwheel (G7b), said gearwheels (G7a, G7b) meshing thus forming sixth gearing (G7), one of the controllable clutches (C4, C5) selectively engaging said gearing (G7), wherein:
- a seventh forward speed from the input shaft (11) to the first driven shaft (13) is provided by the engaged sixth gearing (G7) and closed friction clutch (C0). (Fig. 30)

10. The hybrid transmission (10) according to one of the claims 1 to 9, **characterized in that** the controllable clutches (C1, C4,) engaging the powerflow from the first driveshaft (13) to the driven shafts (15, 18) are embodied as synchronizers, and the controllable clutches (C2, C3, C5) engaging the powerflow from the second driveshaft (14) to the driven shafts (15, 18), and the lock-up clutch are embodied as dog clutches.

11. The hybrid transmission (10) according to one of the claims 1 to 9, **characterized in that** the controllable clutches (C1, C4) engaging the powerflow from the first driveshaft (13) to the driven shafts (15, 18), and the lock-up clutch (CL) are embodied as synchronizers, and the controllable clutches (C2, C3, C5) engaging the powerflow from the second driveshaft (14) to the driven shafts (15, 18) are embodied as dog clutches.

12. A method for engine start in electric mode of a multi-speed power shifted hybrid transmission (10) according to one of the claims 1 to 11, wherein the prime mover is an internal combustion engine, **characterized in that** the method starts when
- the gearing (GR) from the second driveshaft (14) to the driven shaft (18) having reverse gear ratio is engaged;
- the input shaft (11) is being stopped;
- the electric machine (17) is applying driving torque leading to the positive torque applied to the input shaft (11) and positive torque applied to that of driven shafts (15, 18) which is engaged to the second driveshaft (14) with reverse gear ratio;
- the controllable lock-up clutch (CL) is disengaged;
- the controllable brake device (B0) is open;
the method comprising the steps:
a) accelerating the input shaft (11) at least by the driving torque of the electric machine (17) up to a speed level when mean engine firing torque exceeds engine drag torque;
b) establishing a powerflow from the input shaft (11) to the driven shaft (15) with forward gear ratio by closing the controllable friction clutch (C0) and applying driving torque from the engine (ICE).

13. The method according to the claim 12, **characterized in that** before step a) starts, the brake device (B0) is transferred from closed to open state.

14. The method according to claim 12 or 13, **characterized in that** before step a) starts, one gearing (G3, G5, G7) from the first driveshaft (13) to the driven shaft (15, 18) is engaged by one of the controllable clutches (C1, C2, C3, C4), and the controllable friction clutch (C0) is open.

15. The method according to one of the claims 12 to 14, **characterized in that** the method further comprises the steps:
c) applying a braking torque by an external braking device to one of the links kinematically connected to the driven shafts (15, 18) when the input shaft (11) is being stopped, thus reducing vehicle tractive force;
d) releasing the braking torque from the external braking device when the input shaft (11) is rotating.

16. The method according to one of the claims 12 to 15, **characterized in that** the method further comprises the steps:
e) releasing the driving torque by the electric machine (17) simultaneously with torque ramp-up from the engine (ICE) to the first driveshaft (13) in a way that the resulting torque on the driven shafts remain constant, as soon as the powerflow from the input shaft (11) to the driven shaft (15) with forward gear ratio is established and the driving torque from the engine (ICE) is applied, and then;
f) disengaging the gearing (GR) from the second driveshaft (14) to the driven shaft (18) having reverse gear ratio.

17. The method according to claim 16, **characterized in that** the method further comprises the steps:
g1) synchronizing the engine speed (n₁₂) and the first driveshaft speed (n₁₃), and fully closing the controllable friction clutch (C0).

18. The method according to claim 16, **characterized in that** the method further comprises the steps:
g) the engine speed (n₁₂) exceeds the first driveshaft speed (n₁₃), so that the controllable friction clutch (C0) is slipping under load;
h) the electric machine (17) is synchronizing the speeds of the controllable clutch elements (C1, C2, C3, C4) of one of the gearings from the second driveshaft (14) to the driven shaft (15) having forward gear ratio, and then;
i) said gearing from the second driveshaft (14) to the driven shaft (15) having forward gear ratio is engaged, and then;
j) the electric machine (17) is applying a braking torque leading to the negative torque applied to the input shaft (11) and positive torque applied to that of driven shafts (15) which is engaged to the second driveshaft (14) with forward gear ratio;
k) the friction clutch (C0) is disengaged simultaneously with electric machine braking torque ramp-up in a way that the resulting torque on the driven shafts (15, 18) remain constant.

## Patentansprüche

1. Mehrgängiges lastgeschaltetes Hybridgetriebe (10), insbesondere für ein Fahrzeug, umfassend ein Gehäuse (H), eine Eingangswelle (11), die mit einem Antriebsmotor (12) verbunden ist, eine erste Antriebswelle (13), eine zweite Antriebswelle (14), die die konzentrisch mit der ersten Antriebswelle (13) angeordnet ist, wobei jede der beiden Antriebswellen (13, 14) eine Vielzahl von Antriebszahnrädern (G12a, G3a, G4a, G5a; G6a) darauf aufweist, wenigstens eine Abtriebswelle (15, 18) mit wenigstens einem angetriebenen Zahnrad (G12b, G3b, G4b, G5b; G6b; GRb) darauf, das mit den Antriebszahnrädern (G12a, G3a, G4a, G5a; G6a) auf den Antriebswellen (13, 14) kämmt und so Getriebestufen (G1/2, G3, G4, G5; G6; GR) bildet; eine Vielzahl von steuerbaren Kupplungen (C0, C1, C2, C3, C4), die selektiv die Zahnräder (G12a, G3a, G4a, G5a; G6a; G12b, G3b, G4b, G5b; G6b; GRb) mit den entsprechenden Wellen (13, 14) verbinden, um die Getriebestufen (G1/2, G3, G4, G5; G6; GR) mit unterschiedlichen Übersetzungsverhältnissen einzulegen, eine elektrische Maschine (17) mit einem Rotor (17a), ein Planetengetriebe (20) mit wenigstens drei Gliedern, d.h. einem ersten Glied (21), einem zweiten Glied (22) und einem dritten Glied (23), mit einer steuerbaren Überbrückungskupplung (CL), die eine Relativdrehung zwischen der ersten Antriebswelle (13) und der zweiten Antriebswelle (14) blockiert, wobei wenigstens eine der Getriebestufen (G1/2, G3, G4, G5; G6) mit Rückwärtsübersetzung von der zweiten Antriebswelle (14) zu einer der Abtriebswellen (15, 18) in Eingriff gebracht werden kann, wobei das erste Glied (21) mit der Eingangswelle (11) verbunden ist, das zweite Glied (22) mit der zweiten Antriebswelle (14) verbunden ist und das dritte Glied (23) kinematisch mit dem Rotor (17a) der elektrischen Maschine (17) verbunden ist, derart, dass ein Drehzahlverhältnis zwischen dem zweiten Glied (22) und dem dritten Glied (23) bei stillstehendem ersten Glied (21) negativ ist, **dadurch gekennzeichnet, dass** das Getriebe (10) ferner eine steuerbare Reibungskupplung (C0), welche die Eingangswelle (11) kinematisch mit der ersten Antriebswelle (13) verbindet, und eine steuerbare Bremsvorrichtung (B0), welche die Drehung der Eingangswelle (11) gegenüber dem Gehäuse (H) blockiert, umfasst.

2. Hybridgetriebe (10) nach Anspruch 1, **dadurch gekennzeichnet, dass** das erste Glied (21) des Planetengetriebes (20) ein Planetenträger ist, das zweite Glied (22) ein Hohlrad ist und das dritte Glied (23) einen Sonnenrad ist.

3. Hybridgetriebe (10) nach Anspruch 1, **dadurch gekennzeichnet, dass** das erste Glied (21) des Planetengetriebes (20) ein Planetenträger ist, das zweite Glied (22) ein erstes Sonnenrad ist und das dritte Glied (23) ein zweites Sonnenrad ist, wobei wenigstens zwei Planeten auf dem Planetenträger montiert sind, wobei ein erster Planet mit dem ersten Sonnenrad kämmt und ein zweiter Planet mit dem zweiten Sonnenrad kämmt, wobei der erste und der zweite Planet miteinander kämmen.

4. Hybridgetriebe (10) nach einem der Ansprüche 1 bis 3, **dadurch gekennzeichnet, dass** die elektrische Maschine (17) als elektrische Hysteresemaschine ausgeführt ist, wobei die Achse (17a') der elektrischen Maschine (17) abseits der Achse (11a) der Eingangswelle (11) und parallel zu dieser angeordnet ist, der Rotor (17a) der elektrischen Hysteresemaschine wenigstens einen Kanal (32) zur Flüssigkeitskühlung aufweist und der Rotor (17a) über ein Stirnradgetriebe (24) kinematisch mit dem dritten Glied (23) des Planetengetriebes verbunden ist.

5. Hybridgetriebe (10) nach einem der Ansprüche 1 bis 4, **dadurch gekennzeichnet, dass** die zweite Antriebswelle (14) als Hohlwelle ausgebildet ist, die erste Antriebswelle (13) innerhalb der zweiten Antriebswelle (14) gelagert ist.

6. Hybridgetriebe (10) nach einem der Ansprüche 1 bis 5, **dadurch gekennzeichnet, dass** the Reibungskupplung (C0) und die steuerbare Bremsvorrichtung (B0) als eine kombinierte Kupplungs- und Bremsvorrichtung (30) gestaltet sind.

7. Hybridgetriebe (10) nach einem der Ansprüche 1 bis 6, **dadurch gekennzeichnet, dass** die erste Antriebswelle (13) erste (G3a) und zweite (G5a) Antriebszahnräder umfasst, die zweite Antriebswelle (14) dritte (G1/2a) und vierte (G4a) Antriebszahnräder umfasst, die erste Abtriebswelle (13) erste (G3b), zweite (G5b), dritte (G1/2b) und vierte (G4b) angetriebene Zahnräder umfasst, die mit den ersten (G3b), zweiten (G5b), dritten (G1/2b) bzw. vierten (G4b) Antriebszahnrädern kämmen und so erste bis vierte Getriebestufen (G3, G5, G1/2, G4) bilden, und das Getriebe (10) ferner eine zweite Abtriebswelle (18) mit einem gegenläufig angetriebenen Zahnrad (GR) darauf umfasst, das mit dem dritten angetriebenen Zahnrad (G1/2b) auf der ersten Abtriebswelle (15) kämmt und so eine Rückwärtsgetriebestufe (GR) bildet, wobei die steuerbaren Kupplungen (C1, C2, C3, C4) selektiv die Getriebestufen (G1, G2, G3, G4, GR) einlegen, wobei wenigstens zwei Rückwärtsgänge (R1, R2) mit sequentiell absteigenden Übersetzungsverhältnissen und wenigstens fünf Vorwärtsgänge mit sequentiell absteigenden Übersetzungsverhältnissen wie folgt bereitgestellt werden:
- ein erster Rückwärtsgang (R1) von der Eingangswelle (11) zur zweiten Abtriebswelle (14) wird durch die eingelegte Rückwärtsgetriebestufe (GR), die eingerückte Überbrückungskupplung (CL) und die geschlossene Reibungskupplung (C0) bereitgestellt;
- ein zweiter Rückwärtsgang (R2) von der Eingangswelle (11) zur zweiten Abtriebswelle (18) wird durch die eingelegte Rückwärtsgetriebestufe (GR) und elektrische Verriegelung des Rotors (17) der elektrischen Maschine bereitgestellt;
- ein erster Vorwärtsgang von der ersten Antriebswelle (13) zur Abtriebswelle (15, 18) wird durch die eingelegte dritte Getriebestufe (G1/2), die eingerückte Überbrückungskupplung (CL) und die geschlossene Reibungskupplung (C0) bereitgestellt;
- ein zweiter Vorwärtsgang von der Eingangswelle (11) zur ersten Abtriebswelle (13) wird durch die eingelegte dritte Getriebestufe (G1/2) und elektrische Verriegelung des Rotors (17a) der elektrischen Maschine bereitgestellt;
- ein dritter Vorwärtsgang von der Eingangswelle (11) zur ersten Abtriebswelle (13) wird durch die eingelegte erste Getriebestufe (G3) und die geschlossene Reibungskupplung (C0) bereitgestellt;
- ein vierter Vorwärtsgang von der Eingangswelle (11) zur ersten Abtriebswelle (13) wird durch die eingelegte vierte Getriebestufe (G4) und elektrische Verriegelung des Rotors (17a) der elektrischen Maschine bereitgestellt;
- ein fünfter Vorwärtsgang von der Eingangswelle (11) zur ersten Abtriebswelle (13) wird durch die eingelegte zweite Getriebestufe (G5) und die geschlossene Reibungskupplung (C0) bereitgestellt.

8. Hybridgetriebe (10) nach einem der Ansprüche 1 bis 7, **dadurch gekennzeichnet, dass** die zweite Antriebswelle (14) ferner ein fünftes Antriebszahnrad (G6a) umfasst, die erste Abtriebswelle (15) ferner ein fünftes angetriebenes Zahnrad (G6b) umfasst, wobei diese Zahnräder (G6a, G6b) kämmen und so eine fünfte Getriebestufe (G6) bilden, wobei eine der steuerbaren Kupplungen (C2) selektiv diese Getriebestufe (G6) einlegt, wobei:
- ein sechster Vorwärtsgang von der Eingangswelle (11) zur ersten Abtriebswelle (15) durch die eingelegte fünfte Getriebestufe (G6) und eine elektrische Verriegelung des Rotors (17a) der elektrischen Maschine bereitgestellt wird.

9. Hybridgetriebe (10) nach einem der Ansprüche 1 bis 8, **dadurch gekennzeichnet, dass** die erste Antriebswelle (13) ferner ein sechstes Antriebszahnrad (G7a) umfasst, die erste Abtriebswelle (15) ferner ein sechstes angetriebenes Zahnrad (G7b) umfasst, wobei diese Zahnräder (G7a, G7b) kämmen und so eine sechste Getriebestufe (G7) bilden, wobei eine der steuerbaren Kupplungen (C4, C5) selektiv diese Getriebestufe (G7) einlegt, wobei:
- ein siebter Vorwärtsgang von der Eingangswelle (11) zur ersten Abtriebswelle (13) durch die eingelegte sechste Getriebestufe (G7) und die geschlossene Reibungskupplung (C0) bereitgestellt wird (Fig. 30).

10. Hybridgetriebe (10) nach einem der Ansprüche 1 bis 9, **dadurch gekennzeichnet, dass** the steuerbaren Kupplungen (C1, C4,), die den Kraftfluss von der ersten Antriebswelle (13) zu den Abtriebswellen (15, 18) schließen, als Synchronkupplungen ausgeführt sind und die steuerbaren Kupplungen (C2, C3, C5), die den Kraftfluss von der zweiten Antriebswelle (14) zu den Abtriebswellen (15, 18) schließen, und die Überbrückungskupplung als Klauenkupplungen ausgeführt sind.

11. Hybridgetriebe (10) nach einem der Ansprüche 1 bis 9, **dadurch gekennzeichnet, dass** the steuerbaren Kupplungen (C1, C4), die den Kraftfluss von der ersten Antriebswelle (13) zu den Abtriebswellen (15, 18) schließen, und die Überbrückungskupplung (CL) als Synchronkupplungen ausgeführt sind und die steuerbaren Kupplungen (C2, C3, C5), die den Kraftfluss von der zweiten Antriebswelle (14) zu den Abtriebswellen (15, 18) schließen, als Klauenkupplungen ausgeführt sind.

12. Verfahren zum Motorstart im Elektromodus eines mehrgängigen lastgeschalteten Hybridgetriebes (10) nach einem der Ansprüche 1 bis 11, wobei der Antriebsmotor ein Verbrennungsmotor ist, **dadurch gekennzeichnet, dass** das Verfahren beginnt, wenn
- die Getriebestufe (GR) von der zweiten Antriebswelle (14) zur Abtriebswelle (18) mit Rückwärtsübersetzung eingelegt ist;
- die Eingangswelle (11) gestoppt wird;
- die elektrische Maschine (17) ein Antriebsdrehmoment anlegt, das zu dem positiven Drehmoment führt, das an der Eingangswelle (11) anliegt, und zu dem positiven Drehmoment, das an derjenigen der Abtriebswellen (15, 18) anliegt, die mit der zweiten Antriebswelle (14) mit Rückwärtsübersetzung in Eingriff steht;
- die steuerbare Überbrückungskupplung (CL) ausgerückt ist;
- die steuerbare Bremsvorrichtung (B0) geöffnet ist;
wobei das Verfahren die folgenden Schritte umfasst:
a) Beschleunigen der Eingangswelle (11) zumindest durch das Antriebsdrehmoment der elektrischen Maschine (17) auf ein Drehzahlniveau, wo das mittlere Motorzünddrehmoment das Motorschleppmoment übersteigt;
b) Herstellen eines Kraftflusses von der Eingangswelle (11) zur Abtriebswelle (15) mit Vorwärtsübersetzung durch Schließen der steuerbaren Reibungskupplung (C0) und Anlegen des Antriebsdrehmoments vom Motor (ICE).

13. Verfahren nach Anspruch 12, **dadurch gekennzeichnet, dass**, bevor Schritt a) beginnt, die Bremsvorrichtung (B0) vom geschlossenen in den geöffneten Zustand überführt wird.

14. Verfahren nach Anspruch 12 oder 13, **dadurch gekennzeichnet, dass** bevor Schritt a) beginnt, eine Getriebestufe (G3, G5, G7) von der ersten Antriebswelle (13) zur Abtriebswelle (15, 18) durch eine der steuerbaren Kupplungen (C1, C2, C3, C4) eingelegt wird und die steuerbare Reibungskupplung (C0) geöffnet ist.

15. Verfahren nach einem der Ansprüche 12 bis 14, **dadurch gekennzeichnet, dass** das Verfahren ferner die folgenden Schritte umfasst:
c) Anlegen eines Bremsmoments durch eine externe Bremsvorrichtung an eines der mit den Abtriebswellen (15, 18) kinematisch verbundenen Glieder, wenn die Eingangswelle (11) angehalten wird, wodurch die Zugkraft des Fahrzeugs reduziert wird;
d) Zurücknehmen des Bremsmoments von der externen Bremsvorrichtung, wenn sich die Eingangswelle (11) dreht.

16. Verfahren nach einem der Ansprüche 12 bis 15, **dadurch gekennzeichnet, dass** das Verfahren ferner die folgenden Schritte umfasst:
e) Zurücknehmen des Antriebsmoments durch die elektrische Maschine (17) gleichzeitig mit dem Anstieg des Drehmoments vom Motor (ICE) zur ersten Antriebswelle (13), so dass das resultierende Drehmoment an den Abtriebswellen konstant bleibt, sobald der Kraftfluss von der Eingangswelle (11) zur Abtriebswelle (15) mit Vorwärtsübersetzung hergestellt ist und das Antriebsdrehmoment vom Motor (ICE) angelegt wird, und dann
f) Auskuppeln der Getriebestufe (GR) von der zweiten Antriebswelle (14) zur Abtriebswelle (18) mit Rückwärtsübersetzung.

17. Verfahren nach Anspruch 16, **dadurch gekennzeichnet, dass** das Verfahren ferner die folgenden Schritte umfasst:
g1) Synchronisieren der Motordrehzahl (n₁₂) und der Drehzahl (n₁₃) der ersten Antriebswelle und vollständiges Schließen der steuerbaren Reibungskupplung (C0).

18. Verfahren nach Anspruch 16, **dadurch gekennzeichnet, dass** das Verfahren ferner die folgenden Schritte umfasst:
g) die Motordrehzahl (n₁₂) überschreitet die Drehzahl (n₁₃) der ersten Antriebswelle, so dass die steuerbare Reibungskupplung (C0) unter Last rutscht;
h) die elektrische Maschine (17) synchronisiert die Drehzahlen der steuerbaren Kupplungselemente (C1, C2, C3, C4) einer der Getriebestufen von der zweiten Antriebswelle (14) zur Abtriebswelle (15) mit Vorwärtsübersetzung, und dann;
i) wird die Getriebestufe von der zweiten Antriebswelle (14) zur Abtriebswelle (15) mit Vorwärtsübersetzung eingelegt, und dann;
j) legt die elektrische Maschine (17) ein Bremsmoment an, das zu dem negativen Drehmoment führt, das an der Eingangswelle (11) anliegt, und zu dem positiven Drehmoment, das an derjenigen der Abtriebswellen (15) anliegt, die mit der zweiten Antriebswelle (14) mit Vorwärtsübersetzung in Eingriff steht;
k) die Reibungskupplung (C0) wird gleichzeitig mit dem Anstieg des Bremsmoments der elektrischen Maschine gelöst, so dass das resultierende Drehmoment an den Abtriebswellen (15, 18) konstant bleibt.

## Revendications

1. Transmission hybride sous charge à plusieurs vitesses (10), en particulier pour un véhicule, comprenant un carter (H), un arbre d'entrée (11) relié à un moteur principal (12), un premier arbre d'entraînement (13), un second arbre d'entraînement (14) monté concentriquement au premier arbre d'entraînement (13), les deux arbres d'entraînement (13, 14) ayant chacun un ensemble de roues d'engrenage motrices (G12a, G3a, G4a, G5a, G6a) monté sur celui-ci, au moins un arbre entraîné (15, 18) ayant au moins une roue d'engrenage entraînée (G12b, G3b, G4b, G5b, G6b, GRb) montée sur celui-ci engrenant avec les roues d'engrenage motrices (G12a, G3a, G4a, G5a, G6a) situées sur les arbres d'entraînement (13, 14), en formant ainsi des engrenages (G1/2, G3, G4, G5, G6, GR), un ensemble d'embrayages commandables (C0, C1, C2, C3, C4) connectant sélectivement les roues d'engrenage (G12a, G3a, G4a, G5a, G6a ; G12b, G3b, G4b, G5b, G6b, GRb) aux arbres (13, 14) correspondants de façon à mettre en prise les engrenages (G1/2, G3, G4, G5, G6, GR) avec différents rapports de transmission, une machine électrique (17) ayant un rotor (17a), un train planétaire (20) ayant au moins trois liaisons, à savoir une première liaison (21), une seconde liaison (22) et une troisième liaison (23) avec un embrayage de verrouillage (CL) commandable bloquant la rotation relative entre le premier arbre d'entraînement (13) et le second arbre d'entraînement (14), au moins l'un des embrayages (G1/2, G3, G4, G5, G6) pouvant être mis en prise avec un rapport de marche arrière entre le second arbre d'entraînement (14) et l'un quelconque des arbres entraînés (15, 18), la première liaison (21) étant connectée à l'arbre d'entrée (11), la seconde liaison (22) étant connectée au second arbre d'entraînement (14) et la troisième liaison (23) étant connectée cinématiquement au rotor (17a) de la machine électrique (17) de sorte que le rapport de vitesse entre la seconde liaison (22) et la troisième liaison (23) soit négatif lorsque la première liaison (21) est arrêtée,
**caractérisée en ce que**
la transmission (10) comporte en outre un embrayage à friction commandable (C0) connectant cinématiquement l'arbre d'entrée (11) au premier arbre d'entraînement (13) et un dispositif de frein commandable (B0) bloquant la rotation de l'arbre d'entrée (11) par rapport au carter (H).

2. Transmission hybride (10) conforme à la revendication 1,
**caractérisée en ce que**
la première liaison (21) du train planétaire est un porte satellite (20), la seconde liaison (22) est une roue à denture interne et la troisième liaison (23) est une roue solaire.

3. Transmission hybride (10) conforme à la revendication 1,
**caractérisée en ce que**
la première liaison (21) du train planétaire est un porte satellite (20), la seconde liaison (22) est une première roue solaire et la troisième liaison (23) est une seconde roue solaire, au moins deux roues planétaires étant montées sur le porte satellite, une première roue planétaire engrenant avec la première roue solaire et une seconde roue planétaire engrenant avec la second roue solaire, la première roue planétaire et la seconde roue planétaire engrenant l'une avec l'autre.

4. Transmission hybride (10) conforme à l'une des revendications 1 à 3,
**caractérisée en ce que**
la machine électrique (17) est réalisée sous la forme d'une machine électrique à hystérésis, l'axe (17a') de cette machine électrique (17) étant situé à distance de l'axe (11a) de l'arbre d'entrée (11) et étant parallèle à celui-ci, le rotor (17a) de la machine électrique à hystérésis comprenant au moins un canal (32) pour un liquide de refroidissement et le rotor (17a) étant cinématiquement connecté à la troisième liaison (23) du train planétaire par l'intermédiaire d'un train d'engrenages cylindrique (24).

5. Transmission hybride (10) conforme à l'une des revendications 1 à 4,
**caractérisée en ce que**
le second arbre d'entraînement (14) est réalisé sous la forme d'un arbre creux, le premier arbre d'entraînement (13) étant monté à la partie interne du second arbre d'entraînement (14).

6. Transmission hybride (10) conforme à l'une des revendications 1 à 5,
**caractérisée en ce que**
l'embrayage à friction (C0) et le dispositif de frein commandable (B0) sont réalisés sous la forme d'un dispositif d'embrayage et de frein (30) combiné.

7. Transmission hybride (10) conforme à l'une des revendications 1 à 6,
**caractérisée en ce que**
le premier arbre d'entraînement (13) comporte une première roue d'engrenage motrice (G3a) et une seconde roue d'engrenage motrice (G5a), le second arbre d'entraînement (14) comprend une troisième roue d'engrenage motrice (G1/2a) et une quatrième roue d'engrenage motrice (G4a), le premier arbre entraîné (13) comporte une première (G3b), une seconde (G5b), une troisième (G1/2b) et une quatrième (G4b) roues d'engrenage entraînées engrenant respectivement avec la première (G3b), la seconde (G5b), la troisième (G1/G2b) et la quatrième (G4b) roues d'engrenage motrices, en formant ainsi des engrenages (G3, G5, G1/2, G4) entre les premières et quatrièmes roues, et la transmission (10) comporte en outre un second arbre entraîné (18) ayant une roue d'engrenage entraînée de marche arrière (GR) monté sur celui-ci, engrenant avec la troisième roue d'engrenage entraînée (G1/2b) située sur le premier arbre entraîné (15) en formant ainsi un embrayage de marche arrière (GR), les embrayages commandables (C1, C2, C3, C4) mettant sélectivement en prise les engrenages (G1, G2, G3, G4, GR), au moins deux vitesses de marche arrière (R1, R2) ayant des rapports de transmission descendants séquentiellement et au moins quatre vitesses de marche avant ayant des rapports de transmission descendants séquentiellement étant obtenue de la façon suivante :
- une première vitesse de marche arrière (R1) entre l'arbre d'entrée (11) et le second arbre entraîné (14) est obtenue avec l'engrenage de marche arrière en prise (GR), l'embrayage de verrouille (CL) en prise et l'embrayage à friction (C0) fermé,
- une seconde vitesse de marche arrière (R2), entre l'arbre d'entrée (11) et le second arbre entraîné (18) est obtenue avec l'engrenage de marche arrière (GR) en prise et le blocage électrique du rotor (17) de la machine électrique,
- une première vitesse de marche avant entre le premier arbre d'entraînement (13) et l'arbre entraîné (15, 18) est obtenue avec le troisième engrenage (G1/2) en prise, l'embrayage de verrouillage (CL) en prise et l'embrayage à friction (C0) fermé,
- une seconde vitesse de marche avant entre l'arbre d'entrée (11) et le premier arbre entraîné (13) est obtenue avec le troisième engrenage (G1/2) en prise et le blocage électrique du rotor de la machine électrique (17a),
- une troisième vitesse de marche avant entre l'arbre d'entrée (11) et le premier arbre entraîné (13) est obtenue avec le premier engrenage (G3) en prise et l'embrayage à friction (C0) fermé,
- une quatrième vitesse de marche avant entre l'arbre d'entrée (11) et le premier arbre (13) entraîné est obtenue avec le quatrième engrenage (G4) en prise et le blocage électrique du rotor de la machine électrique (17a),
- une cinquième vitesse de marche avant entre l'arbre d'entrée (11) et le premier arbre entraîné (13) est obtenue avec le second embrayage (G5) en prise et l'embrayage à friction (C0) fermé.

8. Transmission hybride (10) conforme à l'une des revendications 1 à 7,
**caractérisée en ce que**
le second arbre d'entraînement (14) comprend en outre une cinquième roue d'engrenage motrice (G6a), le premier arbre entraîné (15) comprend en outre une cinquième roue d'engrenage entraînée (G6b), les roues d'engrenage (G6a, G6b) engrenant en formant ainsi un cinquième engrenage (G6), l'un des embrayages commandables (C2) mettant sélectivement en prime l'engrenage (G6),
- une sixième vitesse de marche avant entre l'arbre d'entrée (11) et le premier arbre entraîné (15) étant obtenue avec le cinquième engrenage (G6) en prise et un blocage électrique du rotor (17a) de la machine électrique.

9. Transmission hybride (10) conforme à l'une quelconque des revendications 1 à 8,
**caractérisée en ce que**
le premier arbre d'entraînement (13) comprend en outre une sixième roue d'engrenage motrice (G7a), le premier arbre entraîné (15) comprend en outre une sixième roue d'engrenage entraînée (G7b), les roues d'engrenage (G7a, G7b) engrenant en formant ainsi un sixième engrenage (G7), l'un des embrayages commandables (C4, C5) mettant sélectivement en prise l'engrenage (G7),
une septième vitesse de marche avant entre l'arbre d'entrée (11) et le premier arbre entraîné (13) étant obtenue avec le sixième engrenage (G7) en prise et l'embrayage à friction (C0) fermé (Fig. 30).

10. Transmission hybride (10) conforme à l'une quelconque des revendications 1 à 9,
**caractérisée en ce que**
les embrayages commandables (C1, C4) mettant en prise le flux d'énergie entre le premier arbre d'entraînement (13) et les arbres entraînés (15, 18) sont réalisés sous la forme de synchroniseurs et les embrayages commandables (C2, C3, C5) mettant en prise le flux d'énergie entre le second arbre d'entraînement (14) et les arbres entraînés (15, 18) et l'embrayage de verrouillage sont réalisés sous la forme d'embrayages à griffes.

11. Transmission hybride (10) conforme à l'une des revendications 1 à 9,
**caractérisée en ce que**
les embrayages commandables (C1, C4) mettant en prise le flux d'énergie entre le premier arbre d'entraînement (13) et les arbres entraînés (15, 18) et l'embrayage de verrouillage (CL) sont réalisés sous la forme de synchroniseurs et les embrayages commandables (C2, C3, C5) mettant en prise le flux d'énergie entre le second arbre d'entraînement (14) et les arbres entraînés (15, 18) sont réalisés sous la forme d'embrayages à griffes.

12. Procédé de démarrage d'un moteur dans un mode électrique d'une transmission hybride sous charge à plusieurs vitesses (10) conforme à l'une des revendications 1 à 11, selon lequel le moteur principal est un moteur à combustion interne,
**caractérisé en ce que**
le procédé commence lorsque :
- l'engrenage (GR) entre le second arbre d'entraînement (14) et l'arbre entraîné (18) ayant un rapport de transmission de marche arrière est en prise,
- l'arbre d'entrée (11) est arrêté,
- la machine électrique (17) applique un couple d'entraînement conduisant au couple positif appliqué à l'arbre d'entrée (11) et à un couple positif appliqué à celui des arbres entraînés (15, 18) qui est en prise avec le second arbre d'entraînement (14) avec un rapport de transmission de marche arrière,
- l'embrayage de verrouillage commandable (CL) est dégagé,
- le dispositif de frein commandable (B0) est ouvert,
ce procédé comprenant des étapes consistant à :
a) accélérer l'arbre d'entrée (11) au moins par le couple d'entraînement de la machine électrique (17) jusqu'à un niveau de vitesse lorsque le couple d'allumage du moteur moyen dépasse le couple de freinage du moteur,
b) établir un flux d'énergie entre l'arbre d'entrée (11) et l'arbre entraîné (15) avec un rapport de transmission de marche avant en fermant l'embrayage à friction commandable (C0) et appliquer un couple d'entraînement à partir du moteur (ICE).

13. Procédé conforme à la revendication 12,
**caractérisé en ce qu'**
avant le début de l'étape a) le dispositif de frein (B0) est transféré de l'état fermé à l'état ouvert.

14. Procédé conforme à la revendication 12 ou 13,
**caractérisé en ce qu'**
avant le début de l'étape a), un engrenage (G3, G5, G7) entre le premier arbre d'entraînement (13) et l'arbre entraîné (15, 18) est mis en prise par l'un des embrayages commandables (C1, C2, C3, C4) et l'embrayage à friction commandable (C0) est ouvert.

15. Procédé conforme à l'une des revendications 12 à 14,
**caractérisé en ce que**
le procédé comprend en outre des étapes consistant à :
c) appliquer un couple de freinage par un dispositif de freinage externe à l'une des liaisons connectées cinématiquement aux arbres entraînés (15, 18) lorsque l'arbre d'entrée (11) est arrêté, en réduisant ainsi la force de traction du véhicule,
d) relâcher le couple de freinage provenant du dispositif de freinage externe lorsque l'arbre d'entrée (11) tourne.

16. Procédé conforme à l'une des revendications 12 à 15,
**caractérisé en ce qu'**
il comporte en outre des étapes consistant à :
e) relâcher le couple d'entraînement par la machine électrique (17) simultanément à la montée en puissance du couple du moteur (ICE) vers le premier arbre d'entraînement (13) de sorte que le couple résultant sur les arbres entraînés demeure constant, dès que le flux d'énergie entre l'arbre d'entrée (11) et l'arbre entraîné (15) avec un rapport de transmission de marche avant est établi, et que le couple d'entraînement provenant du moteur (ICE) est appliqué, puis,
f) dégager l'engrenage (GR) entre le second arbre d'entraînement (14) et l'arbre entrainé (18) ayant un rapport de transmission de marche arrière.

17. Procédé conforme à la revendication 16,
**caractérisé en ce qu'**il comporte en outre une étape consistant à :
g1) synchroniser la vitesse (n₁₂) du moteur et la vitesse (n₁₃) du premier arbre d'entraînement et fermer totalement l'embrayage à friction commandable (C0).

18. Procédé conforme à la revendication 16,
**caractérisé en ce qu'**
il comporte les étapes suivantes :
g) la vitesse (n₁₂) du moteur dépasse la vitesse du premier arbre d'entraînement (n₁₃) de sorte que l'embrayage à friction commandable (C0) glisse sous charge,
h) la machine électrique (17) synchronise les vitesses des éléments d'embrayage commandables (C1, C2, C3, C4) de l'un des engrenages entre le second arbre d'entraînement (14) et l'arbre entraîné (15) ayant un rapport de transmission de marche avant, puis
i) l'engrenage entre le second arbre d'entraînement (14) et l'arbre entraîné (15) ayant un rapport de transmission de marche avant est mis en prise, puis
j) la machine électrique (17) applique un couple de freinage conduisant au couple négatif appliqué à l'arbre d'entrée (11) et à un couple positif appliqué à celui des arbres entraînés (15) qui est en prise avec le second arbre d'entraînement (14) avec un rapport de transmission de marche avant,
k) l'embrayage à friction (C0) est dégagé simultanément à la montée en puissance du couple de freinage de la machine électrique de sorte que le couple résultant sur les arbres entraînés (15, 18) demeure constants.
